(19) Europäisches Patentamt
European Patent Office
Office européen des brevets

(11) **EP 4 447 188 A1**

(12) **EUROPEAN PATENT APPLICATION**
published in accordance with Art. 153(4) EPC

(43) Date of publication:
**16.10.2024 Bulletin 2024/42**

(21) Application number: **22946291.6**

(22) Date of filing: **17.06.2022**

(51) International Patent Classification (IPC):
**H01M 10/42** $^{(2006.01)}$     **H02J 7/00** $^{(2006.01)}$

(52) Cooperative Patent Classification (CPC):
**H01M 10/42; H02J 7/00;** Y02E 60/10

(86) International application number:
**PCT/CN2022/099490**

(87) International publication number:
**WO 2023/240605 (21.12.2023 Gazette 2023/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology (Hong Kong) Limited**
**Central, Central And Western District (HK)**

(72) Inventors:
• LI, Yao
  **Ningde, Fujian 352100 (CN)**
• CHEN, Xiaobo
  **Ningde, Fujian 352100 (CN)**
• PU, Yujie
  **Ningde, Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **SAFETY CONTROL MECHANISM AND METHOD, BATTERY SYSTEM, AND ELECTRIC DEVICE**

(57)    The present application provides a safety regulation mechanism and method, a battery system and an electrical apparatus, which can improve the safety performance of a battery. The safety regulation mechanism is configured to perform a safety regulation on a battery. The safety regulation mechanism comprises: a variable voltage generation module and a safety member. The variable voltage generation module is configured to establish a target voltage difference between the safety member and the battery, the target voltage difference causing the safety member to perform the safety regulation on the battery when an abnormality of the battery occurs. Through this solution, the variable voltage generation module in the safety regulation mechanism can actively establish a target voltage difference between the safety member and the battery, and the actively established target voltage difference can be flexibly adjusted according to actual requirements to adapt to different abnormal conditions of the battery. When an abnormality of the battery occurs, the controllable and accurate target voltage difference can cause the safety member to perform the safety regulation on the battery in a timely manner, so as to improve the safety performance of the battery.

**FIG. 1**

## Description

## TECHNICAL FIELD

The present application relates to the technical field of batteries, and particularly to a safety regulation mechanism and method, a battery system, and an electrical apparatus.

## BACKGROUND ART

With the continuous advancement of battery technologies, various new energy industries using batteries as energy storage devices have developed rapidly. In the development of the battery technologies, in addition to improvement of performance of the batteries, safety is also a non-negligible issue. If the safety of the battery cannot be guaranteed, the battery cannot be used. Therefore, how to improve the safety performance of the battery is an urgent technical problem to be solved in the battery technologies.

## SUMMARY OF THE INVENTION

The present application provides a safety regulation mechanism and method, a battery system, and an electrical apparatus, which can improve the safety performance of a battery.

In a first aspect, provided is a safety regulation mechanism configured to perform a safety regulation on a battery. The safety regulation mechanism includes: a variable voltage generation module and a safety member. The variable voltage generation module is configured to establish a target voltage difference between the safety member and the battery, the target voltage difference causing the safety member to perform the safety regulation on the battery when an abnormality of the battery occurs.

Through the technical solution of embodiments of the present application, in addition to including the safety member, the safety regulation mechanism may further include a variable voltage generation module, which may be configured to actively establish a target voltage difference between the safety member and the battery. The actively established target voltage difference can be flexibly adjusted according to actual requirements to adapt to different abnormal conditions of the battery. When an abnormality of the battery occurs, the controllable and accurate target voltage difference can cause the safety member to perform the safety regulation on the battery in a timely manner, so as to eliminate or prevent potential safety hazards in the battery, thereby performing a timely and effective safety regulation on the battery to improve the safety performance of the battery.

In some possible implementations, the variable voltage generation module comprises: a voltage generator and a variable resistor, and the target voltage difference is related to an output voltage of the voltage generator.

Through the technical solution of the implementations, when the voltage generator has a fixed output voltage, an accurate target voltage difference can be established between the safety member and the battery by adjusting the variable resistor, and the target voltage difference can be accurately adapted to the safety member so that the safety member performs the safety regulation on the battery.

In some possible implementations, the variable voltage generation module further includes: a first control sub-module; and the variable voltage generation module being configured to establish a target voltage difference between the safety member and the battery includes: the first control sub-module being configured to adjust a resistance value of the variable resistor to a target resistance value according to the output voltage of the voltage generator, such that the voltage generator establishes the target voltage difference between the safety member and the battery by means of the variable resistor.

Through the technical solution of the implementations, in the variable voltage generation module, the variable voltage can be generated by means of the voltage generator and the variable resistor, and further, the first control sub-module can control and adjust the resistance value of the variable resistor, such that the voltage generator establishes the target voltage difference between the safety member and the battery by means of the variable resistor. The overall implementation of the variable voltage generation module is reliable and is easy to implement, and can reliably and stably ensure the safety regulation function of the safety regulation mechanism on the battery.

In some possible implementations, the battery includes: a first battery cell; and the first control sub-module is configured to adjust the resistance value of the variable resistor to the target resistance value according to a voltage difference between the voltage generator and the first battery cell, such that the voltage generator establishes the target voltage difference between the safety member and the first battery cell by means of the variable resistor.

Through the technical solution of the implementations, the first control sub-module can adjust the variable resistor according to the voltage difference between the voltage generator and the first battery cell, such that the voltage generator adjusts the inappropriate voltage difference between the voltage generator and the first battery cell to an appropriate target voltage difference by means of the variable resistor, to perform an accurate and effective safety regulation on the battery, so that the safety performance of the battery can be guaranteed reliably and in a targeted manner.

In some possible implementations, the target voltage difference has a preset voltage difference value; and the first control sub-module is configured to determine the target resistance value of the variable resistor according to the preset voltage difference value, a value of the voltage difference between the first battery cell and the voltage generator, an equivalent resistance value between the first battery cell and the safety member, and an equivalent resistance value between the voltage generator and the safety member.

Through the technical solution of the implementations, by means of the electrical loop composed of the first battery cell, the voltage generator (e.g., the second battery cell), the variable resistor and the safety member, the target resistance value of the variable resistor can be determined according to an actually desired preset voltage value, so as to reliably and accurately form a target voltage difference between the first battery cell and the safety member.

In some possible implementations, the variable resistor is connected between the voltage generator and the safety member; or the variable resistor is connected between the first battery cell and the safety member; or the variable resistor is connected between the first battery cell and the voltage generator; or the variable resistor is integrated in the safety member.

Through the technical solution of the implementations, the variable resistor can be flexibly arranged in various positions according to the actual requirements of the battery, which can not only realize the safety regulation function of the safety regulation mechanism, but also not cause too much extra influence on the battery, and can be compatible with various types of battery products.

In some possible implementations, the voltage generator includes: a second battery cell in the battery.

Through the technical solution of the implementations, the second battery cell in the battery is also used as the voltage generator, so that there is no need to add an additional voltage generator in the system where the battery is located, thereby saving the space occupied by the safety regulation mechanism in the system where the battery is located, and facilitating the reduction of the overall volume of the system where the battery is located and the cost required for production. Moreover, the combination of the second battery cell and the variable resistor can flexibly adjust the voltage difference between the safety member and the first battery cell, and there is no need to select a specific second battery cell to obtain an appropriate voltage difference. Therefore, through this technical solution, there is no need to establish multiple alternative loops between the battery cell and the safety member in the battery to select a suitable second battery cell as a voltage generator. This solution not only has a simple circuit structure, but can also accurately and controllably adjust the voltage difference between the first battery cell and the safety member.

In some possible implementations, the safety member contains a safety material; and the target voltage difference causing the safety member to perform the safety regulation includes: the target voltage difference being configured to form an electric arc between the safety member and the battery to break down the safety member, such that the safety member releases the safety material to perform the safety regulation.

Through the technical solution of the implementations, the safety member contains the safety material, and when an abnormality of the battery occurs, the target voltage difference actively established between the safety member and the battery by the variable voltage generation module can actively form an electric arc between the safety member and the battery. Through the electric arc with large energy, the safety member can be broken down effectively and quickly, thereby releasing the safety material contained in the safety member to provide the safety regulation function to the battery, so as to further improve the safety performance of the battery.

In some possible implementations, the battery includes a first battery cell; and the target voltage difference causing the safety member to perform the safety regulation when an abnormality of the battery occurs includes: the target voltage difference causing the safety member to perform the safety regulation when an abnormality of the first battery cell occurs.

Through the technical solution of the implementations, the variable voltage generation module can establish a target voltage difference between the battery and the safety member. When an abnormality of the first battery cell occurs, the safety member can perform the safety regulation on the battery by means of the target voltage difference. This technical solution can perform the safety regulation on the battery in view of the abnormality of the first battery cell in the battery, so that the safety performance of the battery can be ensured reliably and in a targeted manner.

In some possible implementations, establishing a target voltage difference between the safety member and the battery includes: establishing a target voltage difference between the safety member and the first battery cell, and the target voltage difference being configured to form an electric arc between the safety member and the battery to break down the safety member such that the safety member releases the safety material to perform the safety regulation includes: the target voltage difference being configured to form an electric arc between the safety member and the first battery cell to break down the safety member, such that the safety member releases the safety material to perform the safety regulation on a space where the first battery cell is located and/or a space near the first battery cell.

Through the technical solution of the implementations, the electric arc actively formed between the first battery cell and the safety member by the variable voltage generation module can cause the safety material in the safety member to accurately and reliably regulate the space where the first battery cell is located and/or the space near the first battery cell, preventing the heat generated by the first battery cell in an abnormal state from spreading to other parts of the battery, thereby effectively ensuring the safety performance of the battery.

In some possible implementations, the target voltage difference is configured to form the electric arc between the safety member and the first battery cell to break down the safety member and a case of the first battery cell, such that the safety member releases the safety material to perform the safety regulation on an internal space of the first battery cell.

Through the technical solution of the implementations, the electric arc formed between the safety member and the first battery cell can not only break down and damage a container wall of the safety member, but can also break down and damage the case of the first battery cell. When an abnormality of the first battery cell occurs and the internal temperature thereof is high, the electric arc damages the case of the first battery cell, so that it is possible to facilitate the safety material released from the safety member to accurately and effectively cool the interior of the first battery cell, and prevent the heat generated by the first battery cell in an abnormal state from spreading to other battery cells, further improving the safety performance of the battery.

In some possible implementations, the target voltage difference is related to at least one of the following parameters: a wall thickness of the safety member, a distance between the safety member and the first battery cell, and a corresponding area between the safety member and the first battery cell.

Through the technical solution of the embodiments of the present application, when designing the target voltage difference between the safety member and the first battery cell, the safety member, the first battery cell and the relevant parameters in the environment where the two are located can be comprehensively considered to obtain an appropriate target voltage difference, resulting in a stable and controllable electric arc.

In some possible implementations, the target voltage difference is within a range between 4 V and 1000 V.

Through the technical solution of the implementations, the target voltage difference is controlled within the range of 4 V to 1000 V or a more accurate voltage difference range, the voltage difference can form an electric arc between the safety member and the first battery cell, and the electric arc can be broken down the container wall of the safety member to release the safety material, thereby comprehensively ensuring the safety performance of the battery.

In some possible implementations, the first battery cell and the safety member are insulated from each other; and when an abnormality of the first battery cell occurs, the insulation between the first battery cell and the safety member fails, and the target voltage difference between the first battery cell and the safety member causes the safety member to perform the safety regulation on the battery.

Through the technical solution of the embodiments of the present application, in the battery, the mutual insulation between the first battery cell and the safety member can ensure that the safety member has little influence on the first battery cell and ensure the safety performance of the first battery cell in a normal operation state. On this basis, the abnormality of the first battery cell can cause the insulation failure between same and the safety member, and then cause the safety member to perform the safety regulation on the battery where the first battery cell is located, and the overall implementation is highly targeted and reliable.

In some possible implementations, when an abnormality of the first battery cell occurs, a state of an insulating layer between the first battery cell and the safety member changes, such that the insulation between the first battery cell and the safety member fails.

In the technical solution of the implementations, the insulation design of the insulating layer between the first battery cell and the safety member is easy to implement in the battery and can ensure the insulation performance. Further, the insulating layer can respond to abnormal conditions such as thermal runaway of the first battery cell, to fail the effective insulation formed between the first battery cell and the safety member, such that the safety member performs the safety regulation on the battery where the first battery cell is located, to prevent or eliminate the safety impact of the heat generated by the first battery cell on the battery.

In some possible implementations, the safety member is arranged corresponding to the first battery cell.

Through the technical solution of the implementations, the safety member is arranged corresponding to the first battery cell in at least one battery cell, but not corresponding to other battery cells, so that it is possible to prevent the safety member from affecting the other battery cells, thereby ensuring the operating performance of the other normal battery cells in the battery.

In some possible implementations, the variable voltage generation module is configured to obtain a characteristic signal of the battery, the characteristic signal of the battery being configured to indicate that an abnormality of the battery occurs; and the variable voltage generation module is configured to establish the target voltage difference between the safety member and the battery according to the characteristic signal of the battery.

Through the technical solution of the implementations, the variable voltage generation module can obtain the characteristic signal for indicating that an abnormality of the battery occurs and establish the target voltage difference between the safety member and the battery according to the characteristic signal, and the variable voltage generation module then can perform a timely and reliable safety regulation on the battery in an abnormal state.

In some possible implementations, the variable voltage generation module includes: a second control sub-module and a variable voltage sub-module; and the second control sub-module is configured to obtain the characteristic signal of the battery, and to control, according to the characteristic signal of the battery, the variable voltage sub-module to establish the target voltage difference between the safety member and the battery.

Through the technical solution of the implementations, a second control sub-module is provided in the variable voltage generation module, and the second control sub-module can flexibly control the variable voltage sub-module to establish the voltage difference between the safety member and the battery. Compared with the technical solution in which the variable voltage generation module persistently establishes a voltage difference between the safety member and the battery, this technical solution can reduce the influence of the persistent voltage difference between the safety member and the battery on the safety performance of the battery, and further improve the safety management performance of the safety regulation mechanism on the battery.

In some possible implementations, the variable voltage generation module further includes: a monitoring sub-module; and the monitoring sub-module is configured to monitor the characteristic signal of the battery and to send the characteristic signal of the battery to the second control sub-module.

Through the technical solution of the implementations, an independent monitoring sub-module is provided in the safety regulation mechanism, and can be used to actively and real-time monitor the characteristic signal of the battery, so that the safety regulation mechanism can perform a more timely and effective safety management on the battery, to further improve the safety performance of the battery.

In some possible implementations, the characteristic signal of the battery is configured to indicate that the battery is in a thermal runaway state and/or in a critical state within a preset time period before the thermal runaway state.

Through the technical solution of the implementations, the characteristic signal of the battery can be used to indicate the thermal runaway state and/or the critical state of thermal runaway that are common in the battery and cause great damage to the battery. Through the characteristic signal of the battery, the thermal runaway state and/or the critical state of the battery can be effectively regulated to ensure the safety performance of the battery.

In some possible implementations, the characteristic signal of the battery comprises at least one of the following signals: an electrical parameter, a temperature, a pressure, a characteristic gas, or a stress.

Through the technical solution of the implementations, the electrical parameter, the temperature, the pressure, the characteristic gas, the stress, or other signals are easy to detect and can effectively reflect the operating state of the battery. According to the at least one signal, it can be effectively determined that the battery is in an abnormal state, thereby facilitating the safety regulation mechanism to perform the safety regulation on the battery in the abnormal state.

In some possible implementations, the characteristic signal of the battery includes: a characteristic signal of the first battery cell in the battery; and the variable voltage generation module is configured to establish the target voltage difference between the safety member and the first battery cell according to the characteristic signal of the first battery cell.

Through the technical solution of the implementations, the variable voltage generation module can form a target voltage difference between the safety member and the first battery cell more accurately and in a timely manner according to the characteristic signal of the first battery cell, such that the safety member can quickly perform an accurate safety regulation on the first battery cell. Further, when the characteristic signal of the first battery cell is configured to indicate that the first battery cell is in a thermal runaway state and/or in a critical state within a preset time period before the thermal runaway state, the variable voltage generation module and the safety member in the safety regulation mechanism cooperate with each other such that the first battery cell in the thermal runaway state and/or in the critical state can be extinguished in a timely manner or even in advance, preventing the heat inside the first battery cell from spreading in the battery and thus affecting the performance of other battery cells, and quickly performing the safety regulation on the battery where the first battery cell is located, so that the safety performance of the battery can be greatly improved.

In a second aspect, provided is a safety regulation method for performing a safety regulation of a battery. The safety regulation method includes: establishing a target voltage difference between a safety member and the battery, the target voltage difference causing the safety member to perform the safety regulation on the battery when an abnormality of the battery occurs.

In a third aspect, provided is a battery system, including: a battery, and the safety regulation mechanism in the first aspect or in any possible implementation in the first aspect, the safety regulation mechanism being configured to perform a safety regulation on the battery.

In a fourth aspect, provided is an electrical apparatus, including the battery system in the third aspect, the battery system being configured to supply electric energy to the electrical apparatus.

Through the technical solution of embodiments of the present application, in addition to including the safety member, the safety regulation mechanism may further include a variable voltage generation module, which may be configured to actively establish a target voltage difference between the safety member and the battery. The actively established target voltage difference can be flexibly adjusted according to actual requirements to adapt to different abnormal conditions of the battery. When an abnormality of the battery occurs, the controllable and accurate target voltage difference can cause the safety member to perform the safety regulation on the battery in a timely manner, so as to eliminate or prevent potential safety hazards in the battery, thereby performing a timely and effective safety regulation on the battery to improve the safety performance of the battery.

## DESCRIPTION OF DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.

Fig. 1 is a schematic structural diagram of a vehicle provided in an embodiment of the present application;

Fig. 2 is a schematic structural diagram of a battery provided in an embodiment of the present application;

Fig. 3 is a schematic structural block diagram of a safety regulation mechanism provided in an embodiment of the present application;

Fig. 4 is another schematic structural block diagram of a safety regulation mechanism provided in an embodiment of the present application;

Fig. 5 is still another schematic structural block diagram of a safety regulation mechanism provided in an embodiment of the present application;

Fig. 6 is yet another schematic structural block diagram of a safety regulation mechanism provided in an embodiment of the present application;

Fig. 7 is still yet another schematic structural block diagram of a safety regulation mechanism provided in an embodiment of the present application;

Fig. 8 is a further schematic structural block diagram of a safety regulation mechanism provided in an embodiment of the present application;

Fig. 9 is a still further schematic structural block diagram of a safety regulation mechanism provided in an embodiment of the present application;

Fig. 10 is a yet further schematic structural block diagram of a safety regulation mechanism provided in an embodiment of the present application;

Fig. 11 is a still yet further schematic structural block diagram of a safety regulation mechanism provided in an embodiment of the present application;

Fig. 12 is another schematic structural block diagram of a safety regulation mechanism provided in an embodiment of the present application;

Fig. 13 is still another schematic structural block diagram of a safety regulation mechanism provided in an embodiment of the present application;

Fig. 14 is yet another schematic structural block diagram of a safety regulation mechanism provided in an embodiment of the present application;

Fig. 15 is a schematic flowchart of a safety regulation method provided in an embodiment of the present application;

Fig. 16 is a schematic flowchart of another safety regulation method provided in an embodiment of the present application;

Fig. 17 is a schematic flowchart of still another safety regulation method provided in an embodiment of the present application;

Fig. 18 is a schematic flowchart of yet another safety regulation method provided in an embodiment of the present application; and

Fig. 19 is a schematic structural block diagram of a battery system provided in an embodiment of the present application.

In the drawings, the drawings are not drawn to actual scale.

## DETAILED DESCRIPTION

Implementations of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of error.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In order to make the obj ects, technical solutions, and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the present application, the battery refers to a physical module that includes one or more battery cells to supply electric energy. For example, the battery mentioned in the present application may include a battery module, a battery pack, or the like. The battery generally includes a box for packaging one or more battery cells. The box can prevent liquid or other foreign matters from affecting charging or discharging of the battery cells.

Optionally, the battery cell may be a chemical battery or a physical battery and, as an example, may be a lithium-ion secondary battery, a lithium-ion primary battery, a lithium-sulfur battery, a sodium/lithium-ion battery, a sodium-ion battery or a magnesium-ion battery, a fuel cell, etc., which will not be limited in the embodiments of the present application. The battery cell may be cylindrical, flat, cuboid or in another shape, which will not be limited by the embodiments of the present application. The battery cells are generally classified into three types depending on the way of package: cylindrical battery cells, prismatic battery cells and pouch battery cells, which will also not be limited in the embodiments of the present application.

The battery cell includes an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. Optionally, there are a plurality of positive tabs which are laminated together, and there are a plurality of negative tabs which are laminated together. The separator may be made of polypropylene (PP), polyethylene (PE), etc. In addition, the electrode assembly may have a wound structure or a stacked structure, and the embodiments of the present application are not limited thereto.

With the development of the battery technologies, it is necessary to consider many design factors, such as energy density, cycle life, discharge capacity, C-rate and other performance parameters. In addition, the safety of the battery should also be considered.

In some related technologies, in order to ensure the safety of the battery, the battery cell is generally provided with a pressure relief mechanism. The pressure relief mechanism refers to an element or component that is actuated to release an internal pressure or heat when the internal pressure or temperature of the battery cell reaches a predetermined threshold. The pressure relief mechanism may take the form of an element or component that is sensitive to pressure or temperature, for example. That is, when the battery cell is subjected to thermal runaway and the internal pressure or temperature thereof reaches a predetermined threshold, the pressure relief mechanism is actuated, thereby creating a channel through which the internal pressure or heat can be released. After the pressure relief mechanism is actuated, high-temperature and high-pressure substances inside the battery cell are discharged outwardly from the pressure relief mechanism as emissions. The emissions from the interior of the battery cell include, but are not limited to: an electrolytic solution, dissolved or split positive and negative electrode plates, fragments of a separator, high-temperature and high-pressure gas generated by reaction, flames, etc.

When short circuit, overcharge and other phenomena occur on the battery cell, it is possible to lead to thermal runaway inside the battery cell, resulting in a sudden increase in pressure or temperature. In this situation, the internal pressure and heat can be released outwardly through the actuation of the pressure relief mechanism, to prevent the battery cell from exploding and catching fire, thereby ensuring the safety performance of the battery cell.

In addition to providing a pressure relief mechanism on the battery cell to ensure the safety of the battery, an extinguishing component such as a spray pipeline may also be mounted in the box for accommodating the battery cell. The spray pipeline may accommodate an extinguishing medium. The extinguishing medium may be an extinguishing liquid, an extinguishing gas or an extinguishing solid. Optionally, in some implementations, the spray pipeline may be arranged corresponding to the pressure relief mechanism in the battery cell. When the pressure relief mechanism is actuated, the emissions discharged from the battery cell will damage a wall of the spray pipeline, such that the extinguishing medium flows out from the spray pipeline, and the extinguishing medium can cool the high-temperature emissions from the battery cell to reduce the danger of the emissions, thereby improving the safety performance of the battery cell and the entire battery.

In this technical solution, the spray pipeline may be passively damaged by the emissions inside the battery cell only when thermal runaway has occurred inside the battery cell, and then the battery cell that has been subjected to thermal runaway can be cooled. When thermal runaway has occurred inside the battery cell, the temperature of the battery cell is relatively high, and the heat generated thereby may have been transferred to multiple adjacent battery cells, so that the heat has spread between multiple battery cells in the battery. In this situation, even if the spray pipeline can cool the battery cell that has been subjected to thermal runaway, the cooling effect is relatively limited, and the safety regulation performance of the spray pipeline for the overall battery is relatively poor. In addition, when a battery with a different capacity or different energy density is out of control, the temperature of the emissions discharged from a pressure relief mechanism thereof is significantly different, the degree of damage to a spray pipeline is different, and the effect of liquid flowing out from the spray pipeline is also different. Therefore, the extinguishing effect produced by the passively damaged spray pipeline is unstable.

In view of this, the present application provides a safety regulation mechanism for performing a safety regulation on a battery. The safety regulation mechanism includes: a variable voltage generation module and a safety member. The variable voltage generation module is configured to establish a target voltage difference between the safety member and the battery. The target voltage difference causes the safety member to perform the safety regulation on the battery when an abnormality of the battery occurs. In the technical solution provided in the embodiments of the present application, in addition to the safety member, the safety regulation mechanism may further include a variable voltage generation module, which may be configured to actively establish an adjustable target voltage difference between the safety member and the battery. The actively established target voltage difference can be flexibly adjusted according to actual requirements to adapt to different abnormal conditions of the battery. When an abnormality of the battery occurs, the target voltage difference causes the safety member to perform the safety regulation on the battery in a timely manner, so as to eliminate or prevent potential safety hazards in the battery, thereby performing a timely and effective safety regulation on the battery to improve the safety performance of the battery.

The technical solutions described in the embodiments of the present application are applicable to various apparatuses using batteries, such as portable electrical devices, electromobiles, electronic toys, electric tools, electric vehicles, ships, spacecrafts and energy storage systems. For example, the spacecrafts include airplanes, rockets, space shuttles, spaceships, etc.

It should be understood that the technical solutions described in the embodiments of the present application are not only applicable to the foregoing apparatuses, but also applicable to all apparatuses using batteries. However, for the sake of brevity, the following embodiments take electric vehicles as an example for description.

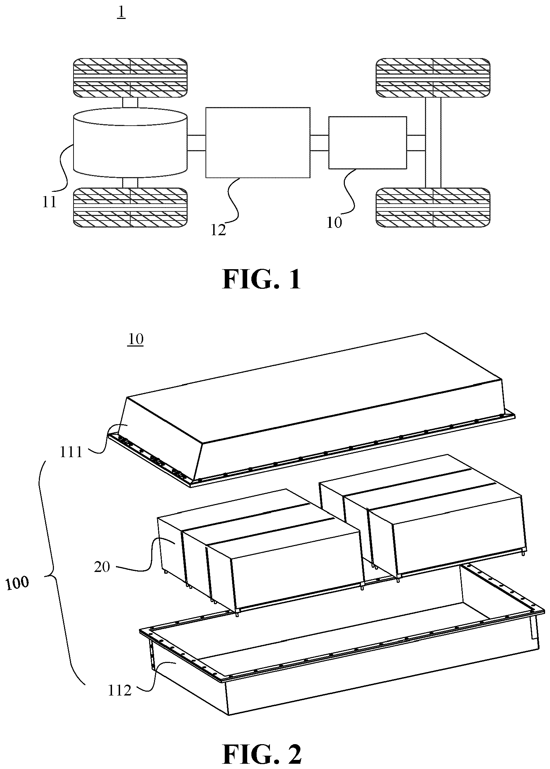

For example, Fig. 1 is a schematic structural diagram of a vehicle 1 according to an embodiment of the present application. The vehicle 1 may be a fuel vehicle, a gas vehicle or a new energy vehicle. The new energy vehicle may be an all-electric vehicle, a hybrid vehicle or an extended range electric vehicle, or the like. A motor 11, a controller 12 and a battery 10 may be provided inside the vehicle 1, and the controller 12 is configured to control the battery 10 to supply power to the motor 11. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

In order to meet different power demands, the battery 10 may comprise a plurality of battery cells which may be in series connection, parallel connection or parallel-series connection. The parallel-series connection refers to a combination of series connection and parallel connection. The battery 10 may also be referred to as a battery pack. Optionally, the plurality of battery cells may be first connected in series, in parallel or in parallel-series connection to form battery modules, and then the multiple battery modules are connected in series, in parallel or in parallel-series connection to form a battery 10. That is to say, a plurality of battery cells may directly constitute a battery 10, or may constitute battery modules, which then constitute a battery 10.

For example, as shown in Fig. 2, which is a schematic structural diagram of a battery 10 according to an embodiment of the present application, the battery 10 may comprise a plurality of battery cells 20. The battery 10 may further comprise a box 100 (or an enclosure). The interior of the box 100 is a hollow structure, and the plurality of battery cells 20 are accommodated in the box 100. As shown in Fig. 2, the box 100 may comprise two portions, which are referred to as a first portion 111 and a second portion 112, respectively, and the first portion 111 and the second portion 112 are fastened together. The shapes of the first portion 111 and the second portion 112 may be determined according to the shape of the combined plurality of battery cells 20, and the first portion 111 and the second portion 112 may each have an opening. For example, the first portion 111 and the second portion 112 each may be a hollow cuboid and each have only one surface with an opening, and the opening of the first portion 111 is arranged opposite to the opening of the second portion 112. The first portion 111 and the second portion 112 are fastened to each other to form a box 100 with a closed chamber. The plurality of battery cells 20 are combined in parallel connection or series connection or parallel-series connection and are then placed in the box 100 formed by fastening the first portion 111 to the second portion 112.

Optionally, the battery 10 may further include other structures, which will not be described in detail herein. For example, the battery 10 may also comprise a busbar. The busbar is configured to implement the electric connection between the plurality of battery cells 20, such as parallel connection, series connection or parallel-series connection. Specifically, the busbar may implement the electrical connection between the battery cells 20 by connecting electrode terminals of the battery cells 20. Further, the busbar may be fixed to the electrode terminals of the battery cells 20 by welding. Electric energy of the plurality of battery cells 20 may be further led out through an electrically conductive mechanism penetrating the box. Optionally, the electrically conductive mechanism may also belong to the busbar.

Depending on different power requirements, the number of battery cells 20 may be set to any value. The plurality of battery cells 20 can be connected in series, in parallel or in parallel-series connection to implement larger capacity or power. Since there may be many battery cells 20 included in each battery 10, the battery cells 20 may be arranged in groups for convenience of mounting, and each group of battery cells 20 constitute a battery module. The number of battery cells 20 included in the battery module is not limited and may be set as required.

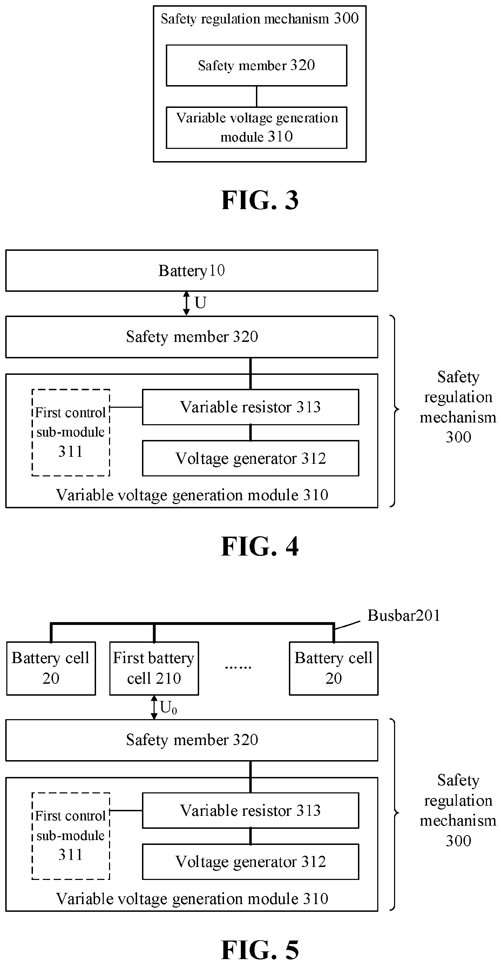

Fig. 3 shows a schematic structural block diagram of a safety regulation mechanism 300 provided in an embodiment of the present application. Specifically, the safety regulation mechanism 300 is configured to perform a safety regulation on a battery. For example, the safety regulation mechanism 300 can perform the safety regulation on the battery 10 shown in Figs. 1 and 2.

As shown in Fig. 3, the safety regulation mechanism 300 includes: a variable voltage generation module 310 and a safety member 320. The variable voltage generation module 310 is configured to establish a target voltage difference between the safety member 320 and the battery 10 (not shown in Fig. 3). The target voltage difference causes the safety member 320 to perform the safety regulation when an abnormality of the battery 10 occurs.

Specifically, in the embodiments of the present application, the variable voltage generation module 310 may be a module capable of forming a variable voltage. For example, the variable voltage generation module 310 may include a power supply, a voltage generation circuit or other modules carrying electric energy. In addition, the variable voltage generation module 310 may also include an adjustable module such as a variable resistor for adjusting an output voltage of the variable voltage generation module 310 so that the variable voltage generation module 310 generates a variable output voltage.

As an example, the variable voltage generation module 310 may include any battery cell 20 in the battery 10. That is, in this example, the battery cell 20 in the battery 10 can not only supply electric energy to an electrical apparatus outside the battery 10, but can also be used as the variable voltage generation module 310 in the embodiments of the present application. As another example, the variable voltage generation module 310 may also be another electrical module independent of the battery 10, and the embodiments of the present application do not limit the specific implementation of the variable voltage generation module 310.

The safety member 320 is a member configured to eliminate hidden dangers or prevent disasters. Specifically, the safety member 320 may be configured to eliminate or prevent hidden dangers or disasters that may occur in the battery 10. As an example, the safety member 320 includes, but is not limited to, an extinguishing member for realizing an extinguishing function. The extinguishing member contains an extinguishing medium, which can extinguish the battery cell 20 and/or other components in the battery 10 that are about to be subjected to thermal runaway or have been subjected to thermal runaway. Of course, in other examples, the safety member 320 may also be a component in other forms, which only needs to be able to realize the safety regulation function, and the embodiments of the present application do not limit the specific implementation of the safety member.

Specifically, the variable voltage generation module 310 is configured to establish a target voltage difference between the safety member 320 and the battery 10. The voltage difference established between the safety member 320 and the battery 10 by the variable voltage generation module 310 can be adjusted and changed within a voltage difference range, and the target voltage difference may be a specific voltage difference within the voltage difference range. When an abnormality of the battery 10 occurs, the target voltage difference may drive the safety member 320 or the voltage difference may cause the safety member 320 to be actuated, such that the safety member 320 can perform the safety regulation on the battery 10 to eliminate or prevent potential safety hazards in the battery 10.

Optionally, the target voltage difference between the safety member 320 and the battery 10 may be established before an abnormality of the battery 10 occurs, or the target voltage difference may be established synchronously when the abnormality of the battery 10 is about to occur or has occurred.

Optionally, the variable voltage generation module 310 may be configured to establish a target voltage difference between the safety member 320 and any component of the battery 10, and when an abnormality of any component of the battery 10 occurs, the target voltage difference may cause the safety member 320 to perform the safety regulation on the component in the battery 10.

It should be noted that the normal understanding of those skilled in the art should be used for whether an abnormality of a battery or a component occurs. For example, when the operating state of the battery or the component does not belong to the normal state and/or does not belong to a preset state, it can be understood that an abnormality of the battery or the component occurs. For another example, when a parameter of the battery or the component does not belong to the normal range and/or does not belong to a preset range, it can be understood that an abnormality of the battery or the component occurs. As an example, when the operating state of the battery 10 is different from the normal state, it can be understood that an abnormality of the battery 10 occurs. When the battery 10 is in the normal state, the operating parameters of the battery 10 are within preset normal parameter ranges. When the battery 10 is in an abnormal state, at least one operating parameter of the battery 10 would exceed a preset normal parameter range, and according to the at least one abnormal operating parameter, it can be determined that an abnormality of the battery 10 occurs. As an example, when the battery 10 is in a thermal runaway state or is in a temporary state where the thermal runaway state is about to occur, at least one operating parameter such as temperature, electrical parameter, and stress of the battery 10 would exceed the normal parameter range. At this time, it can be determined that the battery 10 is in the abnormal state.

It should also be noted that, when the battery 10 is in the normal operation state, the voltage difference established between the safety member 320 and the battery 10 by the variable voltage generation module 310 will not affect the battery 10, and only when an abnormality of the battery 10 occurs, the target voltage difference established between the safety member 320 and the battery 10 by the variable voltage generation module 310 will drive the safety member 320, or the target voltage difference will cause the safety member 320 to be actuated, such that the safety member 320 can perform the safety regulation on the battery 10 to eliminate or prevent potential safety hazards in the battery 10.

To sum up, through the technical solution of embodiments of the present application, in addition to including the safety member 320, the safety regulation mechanism may further include a variable voltage generation module 310, which may be configured to actively establish a target voltage difference between the safety member 320 and the battery 10. The actively established target voltage difference can be flexibly adjusted according to actual requirements to adapt to different abnormal conditions of the battery. When an abnormality of the battery 10 occurs, the controllable and accurate target voltage difference can cause the safety member 320 to perform the safety regulation on the battery 10 in a timely manner, so as to eliminate or prevent potential safety hazards in the battery 10, thereby performing a timely and effective safety regulation on the battery 10 to improve the safety performance of the battery 10.

Fig. 4 shows another schematic structural block diagram of a safety regulation mechanism 300 provided in an embodiment of the present application.

As shown in Fig. 4, in the embodiments of the present application, the variable voltage generation module 310 includes: a voltage generator 312 and a variable resistor 313, and the target voltage difference is related to an output voltage of the voltage generator 312.

Specifically, the voltage generator 312 is a means or module that carries electric energy, and the voltage generator 312 has a fixed output voltage. The voltage generator 312 is connected to the safety member 320 via the variable resistor 313. The variable resistor 313 has an adjustable resistance range. Through the variable resistor 313, the voltage generator 312 can flexibly and accurately establish a target voltage difference between the safety member 320 and the battery 10.

Through the technical solution of the embodiments of the present application, when the voltage generator 312 has a fixed output voltage, an accurate target voltage difference can be established between the safety member 320 and the battery 10 by adjusting the variable resistor 313, and the target voltage difference can be accurately adapted to the safety member 320 so that the safety member 320 performs the safety regulation on the battery 10.

Optionally, as shown in Fig. 4, in addition to the voltage generator 312 and the variable resistor 313, in the embodiments of the present application, the variable voltage generation module 310 includes: a first control sub-module 311. The first control sub-module 311 is configured to adjust the resistance value of the variable resistor 313 to a target resistance value according to the output voltage of the voltage generator 312, such that the voltage generator 312 establishes a target voltage difference between the safety member 320 and the battery 10 by means of the variable resistor 313.

Specifically, in the embodiments of the present application, the first control sub-module 311 may be a control means or a control circuit, which can be configured to control and adjust the resistance value of the variable resistor 313, such that the voltage generator 312 establishes a target voltage difference between the safety member 320 and the battery 10 by means of the variable resistor 313. When the resistance value of the variable resistor 313 is adjusted to the target resistance value, correspondingly, the voltage difference established between the safety member 320 and the first battery cell 210 by the voltage generator 312 is the target voltage difference $U_0$.

Optionally, in some implementations, the first control sub-module 311 may be a battery management system (BMS) for managing the battery 10, or in some other implementations, the first control sub-module 311 may be other types of control means, and the embodiments of the present application do not limit the specific implementation of the first control sub-module 311.

Through the technical solution of the embodiment of the present application, in the variable voltage generation module 310, the variable voltage can be generated by means of the voltage generator 312 and the variable resistor 313, and further, the first control sub-module 311 can control and adjust the resistance value of the variable resistor 313, such that the voltage generator 312 establishes the target voltage difference between the safety member 320 and the battery 10 by means of the variable resistor 313. The overall implementation of the variable voltage generation module 310 is reliable and is easy to implement, and can reliably and stably ensure the safety regulation function of the safety regulation mechanism 300 on the battery 10.

Fig. 5 shows another schematic structural block diagram of a safety regulation mechanism 300 provided in an embodiment of the present application.

As shown in Fig. 5, in the embodiments of the present application, the battery 10 (not shown in Fig. 4) includes a first battery cell 210; and the first control sub-module 311 adjusts the resistance value of the variable resistor 313 to the target resistance value according to a voltage difference between the voltage generator 312 and the first battery cell 210, such that the voltage generator 312 establishes the target voltage difference $U_0$ between the safety member 320 and the first battery cell 210 by means of the variable resistor 313. Optionally, when an abnormality of the first battery cell 210 occurs, the target voltage difference $U_0$ causes the safety member 320 to perform the safety regulation on the battery 10.

Optionally, as shown in Fig. 5, in the battery 10, at least one battery cell 20 is connected in series, in parallel or in parallel-series connection with each other via a busbar 201 to output electric energy to the outside. The first battery cell 210 may be any one of the at least one battery cell 20. The target voltage difference $U_0$ established between the first battery cell 210 and the safety member 320 by the variable voltage generation module 310 may cause the safety member 320 to perform the safety regulation on the battery 10.

Optionally, in the embodiments of the present application, the safety regulation mechanism 300 may be arranged inside the box 100 of the battery 10 to perform the safety regulation on the internal space of the battery 10. For example, the safety regulation mechanism 300 may perform the safety regulation on at least some of the battery cells 20 and/or the spaces between the battery cells 20 in the battery 10, thereby ensuring the safety performance of the battery 10.

Specifically, in the variable voltage generation module 310, when the voltage difference between the voltage generator 312 and the first battery cell 210 is inappropriate, the voltage difference established between the safety member 320 and the first battery cell 210 by the voltage generator 312 will also have an inappropriate problem, and thus cannot drive the safety member 320 to perform the safety regulation function or has a great influence on the safety member 320. In this situation, the first control sub-module 311 may adjust the variable resistor 313 according to the voltage difference between the voltage generator 312 and the first battery cell 210, such that the voltage difference established between the safety member 320 and the first battery cell 210 by the voltage generator 312 is adjusted to an appropriate target voltage difference $U_0$, so as to cause the safety member 320 to perform an accurate and effective safety regulation on the battery 10 where the first battery cell 210 is located.

Through the technical solution of the embodiments of the present application, the first control sub-module 311 can adjust the variable resistor according to the voltage difference between the voltage generator 312 and the first battery cell 210, such that the voltage generator 312 adjusts the inappropriate voltage difference between the voltage generator 312 and the first battery cell 210 to an appropriate target voltage difference $U_0$ by means of the variable resistor 313, to perform an accurate and effective safety regulation on the battery 10, so that the safety performance of the battery 10 can be guaranteed reliably and in a targeted manner.

Optionally, in some possible implementations, the voltage generator 312 may include: a second battery cell in the at least one battery cell 20.

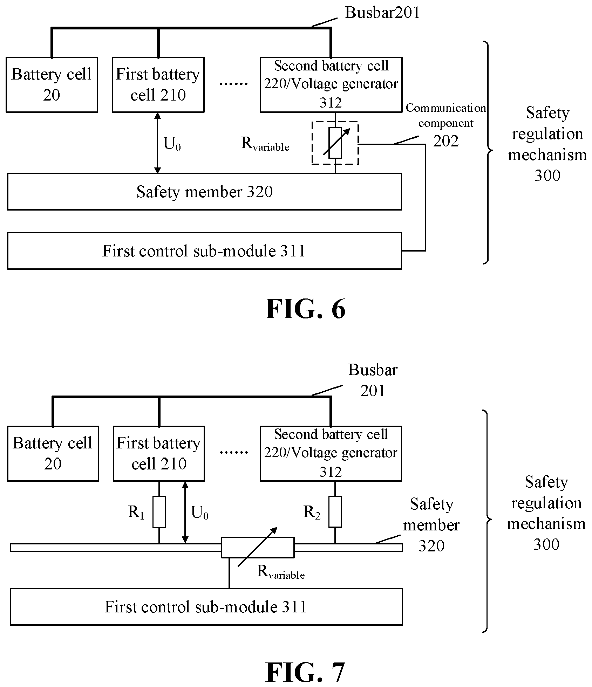

In this situation, Fig. 6 shows another schematic structural block diagram of a safety regulation mechanism 300 provided in an embodiment of the present application.

As shown in Fig. 6, in the embodiments of the present application, the second battery cell 220 in the battery 10 may be also used as the voltage generator 312, and the second battery cell 220 may be any battery cell in the battery 10 other than the first battery cell 210. The second battery cell 220 can supply electric energy to the outside.

Optionally, as shown in Fig. 6, in the embodiments of the present application, a variable resistor 313 (illustrated as $R_{variable}$ in Fig. 6) may be connected between the second battery cell 220 and the safety member 320. Optionally, the variable resistor 313 may be connected to the first control sub-module 311 via a communication component 202, so as to obtain a control signal of the first control sub-module 311 to adjust the resistance value of the variable resistor. The communication component 202 includes, but is not limited to, a signal transmission wire harness or other communication means for signal transmission.

Through the technical solution of the embodiments of the present application, the second battery cell 220 in the battery 10 is also used as the voltage generator 312, so that there is no need to add an additional voltage generator in the system where the battery 10 is located, thereby saving the space occupied by the safety regulation mechanism 300 in the system where the battery 10 is located, and facilitating the reduction of the overall volume of the system where the battery 10 is located and the cost required for production.

Moreover, the combination of the second battery cell 220 and the variable resistor 313 can flexibly adjust the voltage difference between the safety member 320 and the first battery cell 210, and there is no need to select a specific second battery cell 220 to obtain an appropriate voltage difference. Therefore, through the technical solution of the embodiments of the present application, there is no need to establish multiple alternative loops between the battery cell 20 and the safety member 320 in the battery 10 to select a suitable second battery cell 220 as the voltage generator 312. The embodiments of the present application not only has a simple circuit structure, but can also accurately and controllably adjust the voltage difference between the first battery cell 210 and the safety member 320.

As an example, in the embodiment shown in Fig. 6, the variable resistor 313 is connected between the voltage generator 312 (e.g., the second battery cell 220) and the safety member 320. Alternatively, in another example, the variable resistor 313 may be connected between the first battery cell 210 and the safety member 320, or in still another example, the variable resistor 313 may be connected between the first battery cell 210 and the voltage generator 312, or in yet another example, the variable resistor 313 may be integrated in the safety member 320.

Specifically, the variable resistor 313 may be formed in an electrical loop formed by the first battery cell 210, the voltage generator 312 and the safety member 320, and the specific position of the variable resistor 313 is not limited in the embodiments of the present application.

Through the technical solution of the embodiments of the present application, the variable resistor 313 can be flexibly arranged in various positions according to the actual requirements of the battery 10, which can not only realize the safety regulation function of the safety regulation mechanism 300, but also not cause too much extra influence on the battery 10, and can be compatible with various types of battery products.

Optionally, when the variable resistor 313 is not located between the second battery cell 220 and the safety member 320, the second battery cell 220 may be connected to the safety member 320 via an on-off structure or other electrical structures. The on-off structure or other electrical structures may also be controlled by the first control sub-module 311, and connection and disconnection thereof are realized under the control of the first control sub-module 311. For example, when it is necessary to perform the safety regulation on the battery 10, the first control sub-module 311 may control the connection of the on-off structure, and when it is not necessary to perform the safety regulation on the battery 10, the first control sub-module 311 may control the disconnection of the on-off structure. Through this technical solution, the safety regulation mechanism 300 can provide the safety regulation performance while having little influence on the normal operation of the second battery cell 220, thereby ensuring the comprehensive performance of the battery 10.

Optionally, where the variable resistor 313 is located between the second battery cell 220 and the safety member 320, when it is not necessary to perform the safety regulation on the first battery cell 210, the first control sub-module 311 may control the resistance value of the variable resistor 313 to be large to ensure a certain insulation performance between the second battery cell 220 and the safety member 320, thereby reducing the mutual influence between the safety member 320 and the second battery cell 220. When it is necessary to perform the safety regulation on the first battery cell 210, the first control sub-module 311 may control the target resistance value of the variable resistor 313 to be small, such that the second battery cell 220 establishes the target voltage difference $U_0$ between the safety member 320 and the first battery cell 210 by means of the variable resistor 313.

Optionally, in some implementations, the target voltage difference may be a preset voltage difference, and the first control sub-module 311 is configured to determine the target resistance value of the variable resistor 313 according to the preset voltage difference value, a value of the voltage difference between the first battery cell 210 and the voltage generator 312, an equivalent resistance value between the first battery cell 210 and the safety member 320, and an equivalent resistance value between the voltage generator 312 and the safety member 320. The equivalent resistance value between the first battery cell 210 and the safety member 320 is the resistance value of the equivalent resistor formed between the first battery cell 210 and the safety member 320 when an abnormality of the first battery cell occurs.

As an example, Fig. 7 shows another schematic structural block diagram of a safety regulation mechanism 300 provided in an embodiment of the present application.

As shown in Fig. 7, in the embodiments of the present application, the variable resistor 313 (shown as $R_{variable}$ in Fig. 7) may be integrated in the safety member 320, and the first control sub-module 311 is configured to control and adjust the resistance value of the variable resistor 313.

Optionally, when the voltage generator 312 is the second battery cell 220, an equivalent resistor $R_2$ may be formed between the second battery cell 220 and the safety member 320, so that an electrical loop is formed between the second battery cell 220 and the safety member 320. The resistance value of the equivalent resistor $R_2$ may be small, so that it is possible to reduce the voltage division of the equivalent resistor $R_2$ in the loop, and increase the voltage difference between the first battery cell 210 and the safety member 320.

In addition, when an abnormality of the first battery cell 210 occurs, an equivalent resistor $R_1$ may be formed between the first battery cell 210 and the safety member 320. In this situation, the first battery cell 210, the second battery cell 220, the equivalent resistor $R_1$ between the first battery cell 210 and the safety member 320, the equivalent resistor $R_2$ between the second battery cell 210 and the safety member 320, and the variable resistor 313 ($R_{variable}$) form an electrical loop. The voltage difference U between the first battery cell 210 and the safety member 320 may satisfy the following relational expression:

$$ U = \frac{R_1}{(R_1 + R_2 + R_{\text{variable}})} \times (U_1 - U_2); $$

where ($U_1$ - $U_2$) is the voltage difference between the first battery cell 210 and the second battery cell 220. It can be seen from the above relational expression that by adjusting the variable resistor 313 ($R_{variable}$), the voltage difference U between the first battery cell 210 and the safety member 320 can be adjusted. When the resistance value of the variable resistor 313 is adjusted to the target resistance value, the voltage difference U between the first battery cell 210 and the safety member 320 is adjusted to the target voltage difference $U_0$.

Through the technical solution of the embodiments of the present application, by means of the electrical loop composed of the first battery cell 210, the voltage generator 312 (e.g., the second battery cell 220), the variable resistor 313 and the safety member 320, the target resistance value of the variable resistor 313 can be determined according to an actually desired preset voltage value, so as to reliably and accurately form a target voltage difference $U_0$ between the first battery cell 210 and the safety member 320.

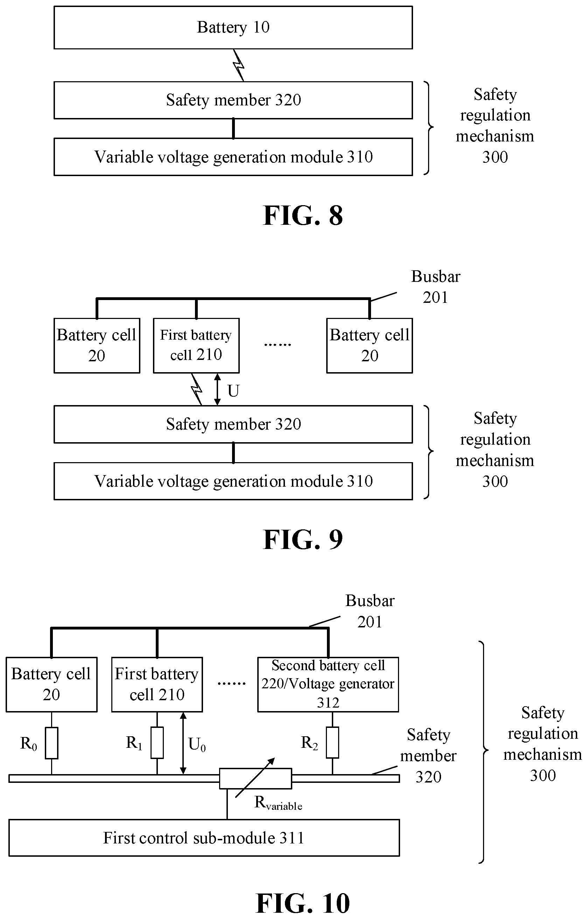

Fig. 8 shows another schematic structural block diagram of a safety regulation mechanism 300 provided in an embodiment of the present application.

As shown in Fig. 8, in the embodiments of the present application, the safety member 320 contains a safety material, and the target voltage difference established between the safety member 320 and the battery 10 by the variable voltage generation module 310 is configured to form an electric arc between the safety member 320 and the battery 10 to break down the safety member 320, such that the safety member 320 releases the safety material to perform the safety regulation.

Specifically, the safety material contained in the safety member 320 may be a material configured to perform the safety regulation on the battery 10. As an example, the safety material may be a fluid with a certain fluidity, which can transfer and exchange heat generated in the battery 10 to perform the safety regulation on the battery 10. The safety material may be a liquid fluid or a gaseous fluid. For example, the fluid includes but is not limited to water, a mixture of water and ethylene glycol, or air. Alternatively, as another example, the safety material may perform the safety regulation on the battery 10 through chemical reaction or other means, which will not be specifically limited in the embodiments of the present application.

Optionally, the safety member 320 containing the safety material may be a tubular container, a plate-like container or a container of any other shape. In some related embodiments, the safety member 320 may also be referred to as an extinguishing pipeline, a cooling plate, and other components for performing thermal management on at least one battery cell 20. Alternatively, in some other embodiments, the safety member 320 may be a dedicated component for performing the safety regulation on the battery 10.

When an abnormality of the battery 10 occurs, the target voltage difference established between the safety member 320 and the battery 10 by the variable voltage generation module 310 may be used to generate an electric arc effect between the two so as to form an electric arc. Specifically, after the variable voltage generation module 310 establishes a target voltage difference between the safety member 320 and the battery 10, the target voltage difference may be used to form a current between the safety member 320 and the battery 10, and the current may break down some insulating medium (e.g., air) between the safety member 320 and the battery 10 to generate instant sparks so as to form an electric arc. The electric arc carries large energy and can break down a container wall of the safety member 320. After the container wall is broken down, the safety material therein is released such that the safety material performs the safety regulation on the battery 10.

Through the technical solution of the embodiments of the present application, the safety member 320 contains the safety material, and when an abnormality of the battery 10 occurs, the target voltage difference actively established between the safety member 320 and the battery 10 by the variable voltage generation module 310 can actively form an electric arc between the safety member 320 and the battery 10. Through the electric arc with large energy, the safety member 320 can be broken down effectively and quickly, thereby releasing the safety material contained in the safety member 320 to provide the safety regulation function to the battery 10, so as to further improve the safety performance of the battery 10.

Optionally, in some possible implementations, the battery 10 includes a first battery cell 210, and the variable voltage generation module 310 is configured to establish a target voltage difference between the safety member 320 and the battery 10; and the target voltage difference causes the safety member 320 to perform the safety regulation when an abnormality of the first battery cell 210 occurs.

Specifically, in the implementations, when an abnormality of the first battery cell 210 occurs, for example, when an operating parameter of the first battery cell 210 exceeds a preset parameter range, the target voltage difference established between the battery 10 where the first battery cell 210 is located and the safety member 320 by the variable voltage generation module 310 may cause the safety member 320 to perform the safety regulation on the battery 10.

Through the technical solution of the implementations, in view of the abnormality of the first battery cell 210 in the battery 10, the safety regulation can be performed on the battery 10 in a timely manner by means of the target voltage difference established between the safety member 320 and the battery 10, so that the safety performance of the battery 10 can be ensured reliably and in a targeted manner.

Fig. 9 shows another schematic structural block diagram of a safety regulation mechanism 300 provided in an embodiment of the present application.

Optionally, as shown in Fig. 9, the variable voltage generation module 310 is configured to establish a target voltage difference $U_0$ between the safety member 320 and the first battery cell 210. The target voltage difference $U_0$ is configured to form an electric arc between the safety member 320 and the first battery cell 210 to break down the safety member 320, such that the safety member 320 releases a safety material to perform a safety regulation on a space where the first battery cell 210 is located and/or a space near the first battery cell 210.

As shown in Fig. 9, in the embodiments of the present application, the safety member 320 may contain a safety material (e.g., fluid). The target voltage difference $U_0$ is configured to form an electric arc between the first battery cell 210 and the safety member 320 to break down the safety member 320 when an abnormality of the first battery cell 210 occurs, such that the safety member 320 releases the safety material to perform a safety regulation on the battery 10. For the convenience of description, the safety material is taken as a fluid as an example to illustrate its safety regulation function.

Optionally, the safety member 320 may provide the temperature regulation function for at least one battery cell 20 through the fluid contained therein. When the fluid inside the safety member is a fluid at a low temperature, the safety member may be used to cool down the at least one battery cell 20 so as to prevent the battery cell 20 from being too high in temperature to cause potential safety hazards. When the fluid inside the safety member is a fluid at a high temperature, the safety member may be used to heat up the battery cell 20 to prevent the electrical properties of the battery cell 20 from being affected during operation in a low temperature environment.

When an abnormality of the first battery cell 210 occurs, the target voltage difference $U_0$ established between the safety member 320 and the first battery cell 210 by the variable voltage generation module 310 may be used to generate an electric arc effect between the two so as to form an electric arc. Specifically, after the variable voltage generation module 310 establishes a target voltage difference $U_0$ between the safety member 320 and the first battery cell 210, the target voltage difference $U_0$ may be used to form a current between the safety member 320 and the first battery cell 210, and the current may break down some insulating medium (e.g., air) between the safety member 320 and the first battery cell 210 to generate instant sparks so as to form an electric arc. The electric arc carries large energy and can break down a container wall of the safety member 320. After the container wall is broken down, the fluid therein flows out to regulate the temperature and other related states of the battery 10.

Through the technical solution of the embodiments of the present application, the safety member 320 contains a fluid, and when the safety member 320 is not broken down, the safety member 320 itself can provide a temperature regulation effect on at least one battery cell 20 through the fluid. On this basis, the target voltage difference $U_0$ actively established between the safety member 320 and the first battery cell 210 by the variable voltage generation module 310 can actively form an electric arc between the safety member 320 and the first battery cell 210. Through the electric arc with large energy, the safety member 320 can be broken down effectively and quickly, so that the fluid contained in the safety member 320 can flow out to further regulate the at least one battery cell 20, so as to further improve the safety performance of the battery 10.

In some implementations of the embodiments of the present application, the target voltage difference $U_0$ is configured to form an electric arc between the safety member 320 and the first battery cell 210 to break down the safety member 320, such that the fluid flows out of the safety member 320 to perform a safety regulation on a space where the first battery cell 210 is located and/or a space near the first battery cell 210.

Optionally, in the implementations, the electric arc formed between the safety member 320 and the first battery cell 210 can break down and damage the region of the safety member 320 that directly faces the first battery cell 210. In this situation, the fluid flowing out of the safety member 320 can provide a better safety regulation effect on the space where the first battery cell 210 is located.

For example, when the first battery cell 210 is about to be subjected to thermal runaway or has been subjected to thermal runaway, the internal temperature thereof is high, and an electric arc actively formed between the first battery cell 210 and the safety member 320 by the variable voltage generation module can 310 at this time can make the fluid in the safety member 320 provide an accurate and reliable cooling effect on the first battery cell 210, preventing the heat generated by the first battery cell 210 from spreading and transferring to other battery cells in the battery 10, thereby effectively ensuring the safety performance of the battery 10.

In addition, while the fluid provides the safety regulation effect on the space where the first battery cell 210 is located, the fluid can also flow to the space near the first battery cell 210, so as to perform the safety regulation on the space near the first battery cell 210. The space near the first battery cell 210 refers to a space within a preset range centered on the first battery cell 210. The space near the first battery cell 210 includes the space where the battery cells 20 adjacent to the first battery cell 210 are located and the space between the adjacent battery cells 20. By "adjacent to the first battery cell 210" does not specifically refer to being directly adjacent to the first battery cell 210, but may also refer to being indirectly adjacent to the first battery cell 210.

Specifically, in the embodiments of the present application, in addition to performing the safety regulation on the space where the first battery cell 210 is located, the fluid flowing out of the safety member 320 can perform the safety regulation on the battery cells 20 near the first battery cell 210, and/or on the space between the first battery cell 210 and the nearby battery cells 20.

Alternatively, as a possible alternative implementation, the electric arc formed between the safety member 320 and the first battery cell 210 may also break down and damage the region of the safety member 320 that is close to the battery cells 20 adjacent to the first battery cell 210. In this situation, the fluid flowing out of the safety member 320 can provide a better safety regulation effect on the battery cells 20 adjacent to the first battery cell 210.

Still alternatively, as another possible alternative implementation, the electric arc formed between the safety member 320 and the first battery cell 210 may also break down and damage both the region of the safety member 320 that directly faces the first battery cell 210 and the region close to the battery cells 20 adjacent to the first battery cell 210. In this situation, the fluid flowing out of the safety member 320 can provide a better safety regulation effect on both the first battery cell 210 and the battery cells adjacent to the first battery cell 210.

Through the technical solution of the implementations, the electric arc actively formed between the first battery cell 210 and the safety member 320 by the variable voltage generation module 310 can cause the fluid in the safety member 320 to accurately and reliably regulate the space where the first battery cell 210 is located and/or the space near the first battery cell 210, preventing the heat generated by the first battery cell 210 in an abnormal state from spreading to other parts of the battery 10, thereby effectively ensuring the safety performance of the battery 10.

In some implementations of the embodiments of the present application, the target voltage difference $U_0$ is configured to form an electric arc between the safety member 320 and the first battery cell 210 to break down the safety member 320 and a case of the first battery cell 210, such that the fluid flows out of the safety member 320 to perform a safety regulation on the internal space of the first battery cell 210.

Specifically, in the implementations, the electric arc formed between the safety member 320 and the first battery cell 210 can not only break down and damage the container wall of the safety member 320, but can also break down and damage the case of the first battery cell 210. As an example, when an abnormality of the first battery cell 210 occurs and the internal temperature thereof is high, the electric arc damages the case of the first battery cell 210, so that it is possible to facilitate the fluid flowing out of the safety member 320 to accurately and effectively cool the interior of the first battery cell 210, and prevent the heat generated by the first battery cell 210 in an abnormal state from spreading to other battery cells, further improving the safety performance of the battery 10.

Specifically, in the embodiments of the present application, the target voltage difference $U_0$ established between the safety member 320 and the first battery cell 210 by the voltage generator 312 may be adjusted by adjusting the variable resistor 313. When the target voltage difference $U_0$ has a different voltage difference value, the electric arc formed between the safety member 320 and the first battery cell 210 has a different energy. Therefore, the electric arc can break down only the container wall of the safety member 320 or both the container wall of the safety member 320 and the case of the first battery cell 210.

Optionally, the target voltage difference $U_0$ is related to at least one of the following parameters: a wall thickness of the safety member 320, a distance between the safety member 320 and the first battery cell 210, and a corresponding area between the safety member 320 and the first battery cell 210.

In some implementations, the target voltage difference $U_0$ for forming an electric arc can be determined by at least one of the parameters mentioned above.

As an example, the target voltage difference $U_0$ and the wall thickness T of the safety member 320 may satisfy the following relationship: $1 \leq U/T \leq 5000$, where the target voltage difference $U_0$ is in V, and the wall thickness T of the safety member 320 is in mm.

As another example, the target voltage difference $U_0$ and the distance d between the safety member 320 and the first battery cell 210 satisfy the following relationship: $U/d \geq 2$, where the target voltage difference $U_0$ is in V, and the distance d between the safety member 320 and the first battery cell 210 is in mm.

As a third example, the target voltage difference $U_0$ and the corresponding area between the safety member 320 and the first battery cell 210 satisfy the following relationship: $U/S \geq 0.00008$, where the target voltage difference $U_0$ is in V, and the corresponding area S between the safety member 320 and the first battery cell 210 is in $mm^2$.

Through the technical solution of the embodiments of the present application, when designing the target voltage difference $U_0$ between the safety member 320 and the first battery cell 210, the safety member 320, the first battery cell 210 and the relevant parameters in the environment where the two are located can be comprehensively considered to obtain an appropriate voltage difference, resulting in a stable and controllable electric arc.

Optionally, in some implementations, the target voltage difference $U_0$ may range from 4 V to 1000 V. Further, the target voltage difference $U_0$ may range from 10 V to 500 V. Still further, the target voltage difference $U_0$ may range from 20 V to 200 V. Yet further, the target voltage difference $U_0$ may range from 20 V to 100 V. Alternatively, still yet further, the target voltage difference $U_0$ may range from 30 V to 60 V.

Through the technical solution of the implementations, the target voltage difference $U_0$ is controlled within the range of 4 V to 1000 V or a more accurate voltage difference range, the target voltage difference $U_0$ can form an electric arc between the safety member 320 and the first battery cell 210, and the electric arc can be broken down and damage the container wall of the safety member 320 to release the safety material, thereby comprehensively ensuring the safety performance of the battery 10.

Specifically, in the embodiments of the present application, the target voltage difference $U_0$ between the safety member 320 and the first battery cell 210 drives the safety member 320 or causes the safety member 320 to be actuated when an abnormality of the first battery cell 210 occurs. The target voltage difference $U_0$ may be established before the abnormality of the first battery cell 210 occurs, but has no influence on the first battery cell 210 that is not abnormal, or the target voltage difference $U_0$ may be established synchronously with the occurring of an abnormality of the first battery cell 210, such that the target voltage difference $U_0$ does not affect the first battery cell 210 when it is in normal operation, thereby ensuring the operating performance of the battery 10.

In addition, the safety member 320 may not establish a voltage difference with other battery cells 20 in the battery 10, or when the other battery cells 20 operate normally, the voltage difference between the safety member 320 and the other battery cells 20 will not affect the other battery cells 20 to ensure the normal operation of the battery 10.

Optionally, in the embodiments of the present application, the first battery cell 210 and the safety member 320 in the battery 10 may be insulated from each other. When an abnormality of the first battery cell 210 occurs, the insulation between the first battery cell 210 and the safety member 320 fails, and the target voltage difference $U_0$ between the first battery cell 210 and the safety member 320 causes the safety member 320 to perform the safety regulation on the battery 10.

In this situation, based on the embodiment shown in Fig. 7 above, Fig. 10 shows another schematic structural block diagram of a safety regulation mechanism 300 provided in an embodiment of the present application.

As shown in Fig. 10, in the embodiments of the present application, each battery cell 20 of at least one battery cell 20 is insulated from the safety member 320; and when an abnormality of the first battery cell 210 occurs, the insulation between the first battery cell 210 and the safety member 320 fails, and the target voltage difference $U_0$ between the first battery cell 210 and the safety member 320 causes the safety member 320 to perform the safety regulation on the battery 10.

As shown in Fig. 10, there may be an insulation design between the safety member 320 and the at least one battery cell 20. The insulation design causes an insulation equivalent resistor $R_0$ to be formed between the safety member 320 and each battery cell 20. The insulation equivalent resistor $R_0$ has a large resistance value. When the human body accidentally touches the battery 10 where the at least one battery cell 20 is located, the insulation equivalent resistor $R_0$ can prevent the battery 10 from causing harm to the human body, thereby ensuring the safety of the human body. Optionally, the insulation equivalent resistor $R_0$ may be designed according to relevant standards or actual requirements, and the embodiments of the present application do not limit the specific resistance value of the insulation equivalent resistor $R_0$.

When the insulation design between the first battery cell 210 of the at least one battery cell 20 and the safety member 320 is affected by the first battery cell 210 or other components, the insulation equivalent resistor $R_0$ between the first battery cell 210 and the safety member 320 is greatly reduced. In this situation, the insulation performance between the first battery cell 210 and the safety member 320 is reduced, or in other words, an insulation failure is generated between the first battery cell 210 and the safety member 320.

As shown in Fig. 10, when an insulation failure is generated between the first battery cell 210 and the safety member 320, the equivalent resistor between the first battery cell 210 and the safety member 320 is reduced from the insulation equivalent resistor $R_0$ to an insulation failure equivalent resistor $R_1$, that is, a first insulation failure point is formed between the first battery cell 210 and the safety member 320.

When the insulation performance between the first battery cell 210 and the safety member 320 is good, there is a large insulation equivalent resistor $R_0$ between the first battery cell 210 and the safety member 320; therefore, the current between the first battery cell 210 and safety member 320 is very small or even almost zero. However, when an insulation failure is generated between the first battery cell 210 and the safety member 320, the resistance between the first battery cell 210 and the safety member 320 will be greatly reduced to form the insulation failure equivalent resistor $R_1$.

In the embodiments of the present application, the second battery cell 220 may also be insulated from the safety member 320 during normal operation. When it is necessary to perform the safety regulation on the battery 10, the second battery cell 220 may, under the control of the first control sub-module 311, generate a second insulation failure point with the safety member 320, that is, the equivalent resistor between the second battery cell 220 and the safety member 320 changes from the insulation equivalent resistor $R_0$ to an insulation failure equivalent resistor $R_2$.

When insulation failure points are formed between both the first battery cell 210 and the second battery cell 220 and the safety member 320, an electrical loop is formed between the first battery cell 210, the second battery cell 220 and the safety member 320, and a target voltage difference $U_0$ is generated between the first battery cell 210 and the safety member 320. The target voltage difference $U_0$ may drive the safety member 320 or cause the safety member 320 to be actuated to perform the safety regulation on the battery 10.

It should be noted that, in the embodiments of the present application, the equivalent resistor $R_2$ between the second battery cell 220 and the safety member 320 is smaller than the equivalent resistor $R_1$ between the first battery cell 210 and the safety member 320. Therefore, the voltage difference between the second battery cell 220 and the safety member 320 is smaller, which will not cause the safety member 320 to be actuated, while the voltage difference between the first battery cell 210 and the safety member 320 is larger, and it is possible to cause the safety member 320 to be actuated through the larger voltage difference.

Through the technical solution of the embodiments of the present application, in the battery 10, the mutual insulation between the first battery cell 210 and the safety member 320 can ensure that the safety member 320 has little influence on the first battery cell 210 and ensure the safety performance of the first battery cell 210 in a normal operation state. On this basis, the abnormality of the first battery cell 210 can cause the insulation failure between same and the safety member 320, and then cause the safety member 320 to perform the safety regulation on the battery 10 where the first battery cell 210 is located, and the overall implementation is highly targeted and reliable.

Optionally, in some implementations, an insulating layer is provided between the first battery cell 210 and the safety member 320 to achieve mutual insulation between the first battery cell 210 and the safety member 320. In the implementations, when an abnormality of the first battery cell 210 occurs, a state of the insulating layer between the first battery cell 210 and the safety member 320 changes, such that the insulation between the first battery cell 210 and the safety member 320 fails.

Optionally, when the first battery cell 210 is subjected to thermal runaway or is about to be subjected to thermal runaway, the temperature of the first battery cell 210 is high. Affected by the higher temperature, the insulating layer between the first battery cell 210 and the safety member 320 is heated and melted, such that the insulation equivalent resistor $R_0$ between the first battery cell 210 and the safety member 320 becomes smaller, forming an insulation failure.

Optionally, in order to ensure that the insulating layer can be melt when the temperature of the first battery cell 210 is high in response to the abnormal state of the first battery cell 210, the melting point of the insulating layer may be lower than 800°C.

Alternatively, in other implementations, the insulating layer between the first battery cell 210 and the safety member 320 may be controlled or influenced by other factors, such that its state changes. For example, when an abnormality of the first battery cell 210 occurs, the insulating layer between same and the safety member 320 may be subjected to an external effect to cause damage or other types of physical state changes, resulting in that the insulation equivalent resistor $R_0$ between the first battery cell 210 and the safety member 320 becomes smaller, forming an insulation failure.

Therefore, in the technical solution of the implementations, the insulation design of the insulating layer between the first battery cell 210 and the safety member 320 is easy to implement in the battery 10 and can ensure the insulation performance. Further, the insulating layer can respond to abnormal conditions such as thermal runaway of the first battery cell 210, to fail the effective insulation formed between the first battery cell 210 and the safety member 320, such that the safety member 320 performs the safety regulation on the battery 10 where the first battery cell 210 is located, to prevent or eliminate the safety impact of the heat generated by the first battery cell 210 on the battery 10.

It should be noted that, in the embodiment shown in Fig. 10 above, in addition to the insulation equivalent resistor $R_0$ that may be formed between the safety member 320 and the at least one battery cell 20, an equivalent resistor of another value may be formed. The resistance value of this equivalent resistor may not reach the order of magnitude of the insulation resistance value, and it may be another resistor with a large resistance value. When the voltage generator 312 establishes the target voltage difference $U_0$ between the first battery cell 210 and the safety member 320 before an abnormality of the first battery cell 210 occurs, the equivalent resistor between the safety member 320 and the first battery cell 210 can cause the target voltage difference $U_0$ to have less influence on the safety member 320 and the first battery cell 210.

Alternatively, in the embodiment shown in Fig. 10 above, the equivalent resistance between the safety member 320 and the at least one battery cell 20 may also be designed to be small or even zero. In this situation, the voltage generator 312 can establish the target voltage difference $U_0$ between the first battery cell 210 and the safety member 320 by means of the variable resistor 313 when an abnormality of the first battery cell 210 occurs.

In this situation, in order to prevent the safety member 320 from affecting other battery cells 20, the safety member 320 may be arranged corresponding to the first battery cell 210 of the at least one battery cell 20 but not corresponding to the other battery cells 20, so as to ensure the operating performance of the other normal battery cells 20 in the battery 10.

Alternatively, when the equivalent resistor between the safety member 320 and the at least one battery cell 20 is the insulation equivalent resistor $R_0$ or another resistor with a large resistance, the safety member 320 may be arranged corresponding to the first battery cell 210 but not corresponding to the other battery cells 20.

For the above embodiments of the present application, in some implementations, the variable voltage generation module 310 may be directly connected to the safety member 320, such that a target voltage difference is formed between the safety member 320 and the battery 10. In the implementations, a voltage difference may be established before an abnormality of the battery 10 occurs.

Alternatively, in some other implementations, the variable voltage generation module 310 may also be configured to obtain a characteristic signal of the battery 10. The characteristic signal of the battery 10 is configured to indicate that an abnormality of the battery 10 occurs. The variable voltage generation module 310 is configured to establish the target voltage difference between the safety member 320 and the battery 10 according to the characteristic signal of the battery 10. In the implementations, the target voltage difference may be established synchronously with the occurring of the abnormality of the battery 10.

Specifically, in the technical solution of the implementations, the characteristic signal of the battery 10 may include: a state signal reflecting an abnormal state of the battery 10. For example, the characteristic signal of the battery 10 may include: a characteristic signal of at least one battery cell 20 in the battery 10, and/or a characteristic signal of other components in the battery 10. The characteristic signal includes, but is not limited to, an electrical parameter (e.g., current or voltage), temperature, pressure, characteristic gas, or stress. When the battery 10 is in an abnormal state, the signal value of the characteristic signal of the battery 10 is different from the signal value of the battery 10 in a normal state. From the signal value of the characteristic signal of the battery 10, it can be determined that the battery 10 is in the abnormal state.

As an example and not limitation, the characteristic signal of the battery 10 may be configured to indicate that the battery 10 is in a thermal runaway state and/or in a critical state within a preset time period before the thermal runaway state. Specifically, when any one of the battery cells 20 in the battery 10 is subjected to thermal runaway or is about to be subjected to thermal runaway, the electrical parameter of the battery 10, the temperature, pressure, and characteristic gas inside the battery 10, the local stress on the box of the battery 10, and other characteristic signals may change compared with the normal state. The variable voltage generation module 310 may determine that the battery cell 20 inside the battery 10 is subjected to thermal runaway or is about to be subjected to thermal runaway by obtaining the characteristic signal of the battery 10, to establish a voltage difference between the safety member 320 and the battery 10, so as to cause the safety member 320 to perform the safety regulation on the battery 10.

Through the technical solution of the embodiments of the present application, the variable voltage generation module 310 can obtain the characteristic signal for indicating that an abnormality of the battery 10 occurs and establish the target voltage difference $U_0$ between the safety member 320 and the battery 10 according to the characteristic signal, and the variable voltage generation module 310 then can perform a timely and reliable safety regulation on the battery 10 in an abnormal state.

Optionally, the characteristic signal of the battery 10 may include: a characteristic signal of the first battery cell 210 in the battery 10. The characteristic signal of the first battery cell 210 is configured to indicate that the first battery cell 210 is in an abnormal state.

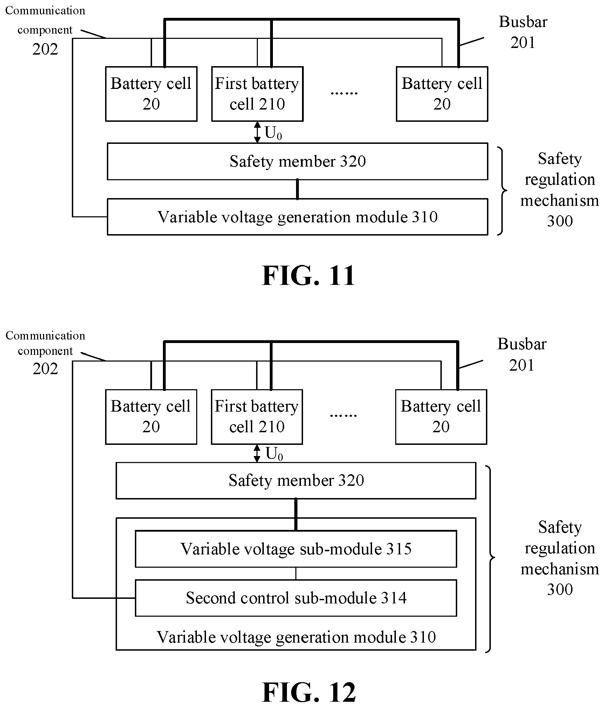

In this implementation, Fig. 11 shows another schematic structural block diagram of a safety regulation mechanism 300 provided in an embodiment of the present application.

Optionally, as shown in Fig. 11, the variable voltage generation module 310 may be connected to at least one battery cell 20 in the battery 10 via a communication component 202, so as to obtain a signal of the at least one battery cell 20. The communication component 202 includes, but is not limited to, a signal transmission wire harness or other communication means for signal transmission. In addition, the variable voltage generation module 310, in addition to being connected to the at least one battery cell 20 via the communication component 202, may be connected to other components in the battery 10 via the communication component 202, so as to obtain signals of other components.

Specifically, the variable voltage generation module 310 may be configured to obtain a characteristic signal of the first battery cell 210 in the battery 10, and establish a target voltage difference $U_0$ between the safety member 320 and the first battery cell 210 according to the characteristic signal of the first battery cell 210. The characteristic signal of the first battery cell 210 is configured to indicate that an abnormality of the first battery cell 210 occurs.

In the implementations, the characteristic signal of the first battery cell 210 may include at least one of the following parameters of the first battery cell 210: an electrical parameter, temperature, pressure, characteristic gas or stress.

When an abnormality of the first battery cell 210 occurs, the first battery cell 210 is in an abnormal state, which may be other states different from the normal operation state. For example, the abnormal state of the first battery cell 210 may be a thermal runaway state and/or a critical state within a preset time period before the thermal runaway state. Alternatively, the abnormal state of the first battery cell 210 may be other monitorable abnormal states in addition to the thermal runaway state and/or the critical state of the thermal runaway state. The embodiments of the present application do not specifically limit the type of the abnormal state.

Through the technical solution of the embodiments of the present application, the variable voltage generation module 310 can form a target voltage difference $U_0$ between the safety member 320 and the first battery cell 210 more accurately and in a timely manner according to the characteristic signal of the first battery cell 210, such that the safety member 320 can quickly perform an accurate safety regulation on the first battery cell 210.

Further, when the characteristic signal of the first battery cell 210 is configured to indicate that the first battery cell 210 is in a thermal runaway state and/or in a critical state within a preset time period before the thermal runaway state, the variable voltage generation module 310 and the safety member 320 in the safety regulation mechanism 300 cooperate with each other such that the first battery cell 210 in the thermal runaway state and/or in the critical state can be extinguished in a timely manner or even in advance, preventing the heat inside the first battery cell 210 from spreading in the battery 10 and thus affecting the performance of other battery cells, and quickly performing the safety regulation on the battery 10 where the first battery cell 210 is located, so that the safety performance of the battery 10 can be greatly improved.

Optionally, in addition to the fact that the variable voltage generation module 310 may obtain the characteristic signal of the first battery cell 210 in the battery 10, in other alternative implementations, the variable voltage generation module 310 may also obtain a characteristic signal of a battery cell adjacent to the first battery cell 210 in the battery 10, and establish a target voltage difference $U_0$ between the safety member 320 and the first battery cell 210 according to the characteristic signal of the first battery cell 210 and/or the characteristic signal of the battery cell adjacent to the first battery cell 210.

Optionally, after obtaining the characteristic signal of the first battery cell 210 and/or the battery cell adjacent to the first battery cell 210 in the battery 10, the variable voltage generation module 310, in addition to establishing the target voltage difference $U_0$ between the safety member 320 and the first battery cell 210, may establish a voltage difference between the safety member 320 and the adjacent battery cell (adjacent to the first battery cell 210).

Fig. 12 shows another schematic structural block diagram of a safety regulation mechanism 300 provided in an embodiment of the present application.

As shown in Fig. 12, in the embodiments of the present application, the variable voltage generation module 310 includes: a second control sub-module 314 and a variable voltage sub-module 315. The second control sub-module 314 is configured to obtain the characteristic signal of the battery 10 (not shown in Fig. 8), and to control, according to the characteristic signal of the battery 10, the variable voltage sub-module 315 to establish the target voltage difference between the safety member 320 and the battery 10.

Specifically, in the embodiments of the present application, the variable voltage sub-module 315 may include the voltage generator 312 and the variable resistor 313 in the related embodiments above.

Optionally, in some implementations, the second control sub-module 314 may be a battery management system (BMS) for managing the battery 10, or in some other implementations, the second control sub-module 314 may be other types of control means, and the embodiments of the present application do not limit the specific implementation of the second control sub-module 314.

Optionally, the second control sub-module 314 may be the same control module as the first control sub-module 311 in the above embodiments, or, the second control sub-module 314 and the first control sub-module 311 in the above embodiments may be two separate control modules.

The second control sub-module 314 may send a first control signal to the variable voltage sub-module 315 according to the characteristic signal of the battery 10, and the variable voltage sub-module 315 may establish a target voltage difference between the safety member 320 and the battery 10 under the control of the first control signal. Optionally, the variable resistor 313 in the variable voltage sub-module 315 may be adjusted under the control of the first control signal, such that the voltage generator 312 establishes a target voltage difference between the safety member 320 and the battery 10 by means of the variable resistor 313.

In addition, the second control sub-module 314 also sends a second control signal to the variable voltage sub-module 315 according to other signals of the battery 10, and the variable voltage sub-module 315 may also cancel the target voltage difference established between the safety member 320 and the battery 10 under the control of the second control signal, to reduce the influence of the safety member 320 on the safety performance of the battery 10, and further improve the safety regulation performance of the safety regulation mechanism 300 on the battery 10.

Optionally, in the embodiment shown in Fig. 12, the second control sub-module 314 may be connected to at least one battery cell 20 in the battery 10 via a communication component 202, so as to obtain a signal of the at least one battery cell 20. When an abnormality of the first battery cell 210 of the at least one battery cell 20 occurs, the second control sub-module 314 is configured to obtain the characteristic signal of the first battery cell 210 and control, according to the characteristic signal, the variable voltage sub-module 315 to establish a target voltage difference $U_0$ between the safety member 320 and the first battery cell 210.

Through the technical solution of the embodiments of the present application, the second control sub-module 314 is provided in the variable voltage generation module 310, and the second control sub-module 314 can flexibly control the variable voltage sub-module 315 to establish the voltage difference between the safety member 320 and the battery 10. Compared with the technical solution in which the variable voltage generation module 310 persistently establishes a voltage difference between the safety member 320 and the battery 10, this technical solution can reduce the influence of the persistent voltage difference between the safety member 320 and the battery 10 on the safety performance of the battery 10, and further improve the safety management performance of the safety regulation mechanism 300 on the battery 10.

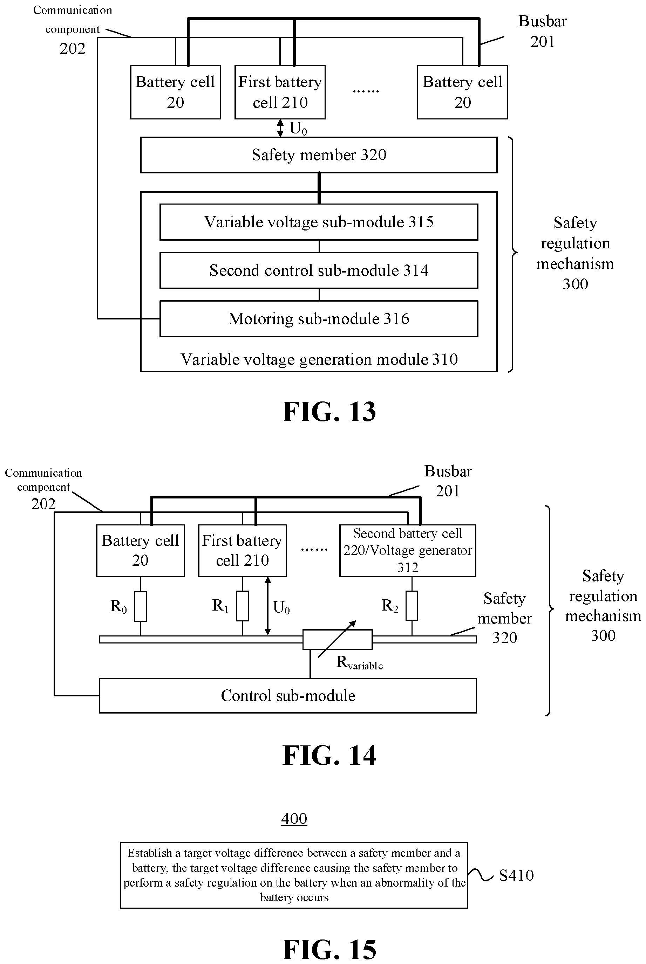

Fig. 13 shows another schematic structural block diagram of a safety regulation mechanism 300 provided in an embodiment of the present application.

As shown in Fig. 13, in the embodiments of the present application, the variable voltage generation module 310 further includes: a monitoring sub-module 316 configured to monitor the characteristic signal of the battery 10 and to send the characteristic signal of the battery 10 (not shown in Fig. 9) to the second control sub-module 314. The second control sub-module 314 is configured to receive the characteristic signal of the battery 10 sent by the monitoring sub-module 316, and to control, according to the characteristic signal, the variable voltage sub-module 315 to establish a target voltage difference between the safety member 320 and the battery 10.

Specifically, the embodiments of the present application provide an independent monitoring sub-module 316 configured to monitor the operating state of the battery 10 in real time. For example, the monitoring sub-module 316 is configured to monitor a signal of each battery cell 20 in the battery 10 and/or to monitor signals of other components in the battery 10. Optionally, the monitoring sub-module 316 includes, but is not limited to, a cell supervision circuit (CSC) or other modules for monitoring the operating state of the battery 10.

Optionally, in the embodiment shown in Fig. 13, the monitoring sub-module 316 may be configured to monitor the at least one battery cell 20 in the battery 10 in real time, and when an abnormality of the first battery cell 210 of the at least one battery cell 20 occurs, the monitoring sub-module 316 sends the characteristic signal of the first battery cell 210 to the second control sub-module 314. The second control sub-module 314 is configured to control, according to the characteristic signal of the first battery cell 210, the variable voltage sub-module 315 to establish the target voltage difference $U_0$ between the safety member 320 and the first battery cell 210.

Optionally, there may be one or more monitoring sub-modules 316. When there are a plurality of monitoring sub-modules 316, they may be distributed in the box of the battery 10, so as to comprehensively monitor the characteristic signals of the at least one battery cell 20 and other components inside the battery 10 by means of the plurality of monitoring sub-modules 316.

Through the technical solution of the embodiments of the present application, an independent monitoring sub-module 316 is provided in the safety regulation mechanism 300, and can be used to actively and real-time monitor the characteristic signal of the battery 10, so that the safety regulation mechanism 300 can perform a more timely and effective safety management on the battery 10, to further improve the safety performance of the battery 10.

Fig. 14 shows another schematic structural block diagram of a safety regulation mechanism 300 provided in an embodiment of the present application.

As shown in Fig. 14, in the embodiments of the present application, the safety regulation mechanism 300 includes: a variable voltage generation module 310 (not shown) and a safety member 320. The variable voltage generation module 310 includes: a control sub-module, a voltage generator 312 and a variable resistor 313 (shown as $R_{variable}$). The control sub-module may include the first control sub-module 311 and the second control sub-module 314 in the above embodiments.

Optionally, in the embodiment shown in Fig. 14, the second battery cell 220 in the reusable battery 10 may be also used as the voltage generator 312 in the variable voltage generation module 310.

Optionally, in the embodiments of the present application, an insulating layer is formed between the at least one battery cell 20 and the safety member 320, and the at least one battery cell 20 and the safety member 320 are insulated from each other when the at least one battery cell 20 is in a normal operation state, and there is an insulation equivalent resistor $R_0$ between each battery cell 20 of the at least one battery cell 20 and the safety member 320.

As shown in Fig. 14, the control sub-module may be connected to the at least one battery cell 20 via a communication component 202, and when an abnormality of the first battery cell 210 occurs, the control sub-module may receive the characteristic signal of the first battery cell 210 to damage the insulation state between the second battery cell 220 and the safety member 320, so that the resistance value of an equivalent resistor $R_2$ formed between the second battery cell 220 and the safety member 320 is small, and an insulation failure point is formed therebetween.

Further, when the abnormality of the first battery cell 210 causes the insulating layer between the first battery cell and the safety member 320 to be melted, an insulation failure point is also formed between the first battery cell 210 and the safety member 320, and an equivalent resistor $R_1$ is formed between the first battery cell 210 and the safety member 320. Since the first battery cell 210 and the second battery cell 220 each form an insulation failure point with the safety member 320, the first battery cell 210, the second battery cell 220 and the safety member 320 form an electrical loop.

The variable resistor 313 is arranged in the electrical loop, and an appropriate target voltage difference $U_0$ between the first battery cell 210 and the safety member 320 can be provided by adjusting the variable resistor 313. The target voltage difference $U_0$ may generate an electric arc to break down the safety member 320 containing a fluid, such that the fluid flows out of the safety member 320 to perform the safety regulation on the first battery cell 210 and its surrounding space.

As an example, in the embodiment shown in Fig. 14, the variable resistor 313 may be integrated in the safety member 320. Alternatively, in other examples, the variable resistor 313 may be located between the first battery cell 210 and the safety member 320, or the variable resistor 313 may be located between the second battery cell 220 and the safety member 320, or the variable resistor 313 may be located between the first battery cell 210 and the second battery cell 220.

The safety regulation mechanism 300 of the embodiments of the present application is described above with reference to Figs. 3 to 14. A safety regulation method of the embodiments of the present application will be described below with reference to Figs. 15 to 18. For the parts not described in detail, reference can be made to the foregoing embodiments.

Fig. 15 shows a schematic flowchart of a safety regulation method 400 provided in an embodiment of the present application. The safety regulation method 400 may be configured to perform a safety regulation on a battery, such as the battery 10 described above.

As shown in Fig. 15, in the embodiments of the present application, the safety regulation method 400 may include the following steps.

In S410, a target voltage difference is established between a safety member and a battery, the target voltage difference causing the safety member to perform a safety regulation on the battery when an abnormality of the battery occurs.

Specifically, in the embodiments of the present application, the execution subject of step S410 described above may be the variable voltage generation module 310 in the above apparatus embodiments, and the safety member in step S410 may be the safety member 320 in the above apparatus embodiments. That is, in the embodiments of the present application, the variable voltage generation module 310 establishes a target voltage difference between the safety member 320 and the battery 10. The relevant technical solutions of the variable voltage generation module 310, the safety member 320 and the voltage difference can refer to the relevant description of the above apparatus embodiments, and will not be repeated here.

Optionally, in some implementations, the variable voltage generation module 310 includes: a voltage generator 312 and a variable resistor 313, and the target voltage difference is related to an output voltage of the voltage generator 312.

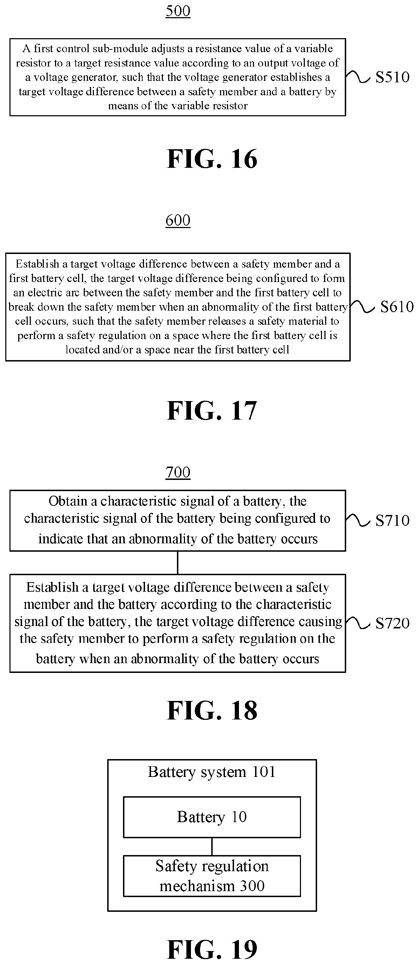

Optionally, in addition to the voltage generator 312 and the variable resistor 313, the variable voltage generation module 310 further includes: a first control sub-module 311. In this situation, Fig. 16 shows a schematic flowchart of another safety regulation method 500 provided in an embodiment of the present application.

As shown in Fig. 16, in the embodiments of the present application, the safety regulation method 500 may include the following steps.

In S510, a first control sub-module adjusts a resistance value of a variable resistor to a target resistance value according to an output voltage of a voltage generator, such that the voltage generator establishes a target voltage difference between a safety member and a battery by means of the variable resistor. In some possible implementations, the battery includes: a first battery cell. In this situation, step S510 described above may include: the first control sub-module adjusting the resistance value of the variable resistor to the target resistance value according to a voltage difference between the voltage generator and the first battery cell, such that the voltage generator establishes the target voltage difference between the safety member and the first battery cell by means of the variable resistor.

In some possible implementations, the target voltage difference has a preset voltage difference value. In this situation, before step S510 described above, the safety regulation method 500 further includes: the first control sub-module determining the target resistance value of the variable resistor according to the preset voltage difference value, a value of the voltage difference between the first battery cell and the voltage generator, an equivalent resistance value between the first battery cell and the safety member, and an equivalent resistance value between the voltage generator and the safety member.

In some possible implementations, the variable resistor is connected between the voltage generator and the safety member; or the variable resistor is connected between the first battery cell and the safety member; or the variable resistor is connected between the first battery cell and a second battery cell; or the variable resistor is integrated in the safety member.

In some possible implementations, the voltage generator includes: a second battery cell in the battery.

It should be noted that, in the embodiments of the present application, the first control sub-module, the voltage generator and the variable resistor included in the variable voltage generation module may be respectively the first control sub-module 311, the voltage generator 312 and the variable resistor 313 in the above apparatus embodiments, and the technical solution of these modules cooperating with each other to create the target voltage difference $U_0$ between the first battery cell 210 and the safety member 320 can refer to the specific description of the above apparatus embodiments, and will not be repeated here.

Optionally, in some implementations, the safety member contains a safety material; and the target voltage difference causing the safety member to perform the safety regulation comprises: the target voltage difference being configured to form an electric arc between the safety member and the battery to break down the safety member, such that the safety member releases the safety material to perform the safety regulation.

Optionally, in some implementations, the battery includes a first battery cell; and the target voltage difference causing the safety member to perform the safety regulation when an abnormality of the battery occurs comprises: the target voltage difference causing the safety member to perform the safety regulation when an abnormality of the first battery cell occurs.

Fig. 17 shows a schematic flowchart of another safety regulation method 600 provided in an embodiment of the present application.

As shown in Fig. 17, in the embodiments of the present application, the safety regulation method 600 may include the following steps.

In S610, a target voltage difference is established between a safety member and a first battery cell, the target voltage difference being configured to form an electric arc between the safety member and the first battery cell to break down the safety member when an abnormality of the first battery cell occurs, such that the safety member releases a safety material to perform a safety regulation on a space where the first battery cell is located and/or a space near the first battery cell.

In some possible implementations, the target voltage difference is configured to form the electric arc between the safety member and the first battery cell to break down the safety member and a case of the first battery cell, such that the safety member releases the safety material to perform the safety regulation on an internal space of the first battery cell.

In some possible implementations, the target voltage difference is related to at least one of the following parameters: a wall thickness of the safety member, a distance between the safety member and the first battery cell, and a corresponding area between the safety member and the first battery cell.

In some possible implementations, the target voltage difference and the wall thickness of the safety member satisfy the following relationship: $1 \leq U/T \leq 5000$, where U is the voltage difference in V, and T is the wall thickness of the safety member in mm; and/or the target voltage difference and the distance between the safety member and the first battery cell satisfies the following relationship: $U/d \geq 2$, where U is the voltage difference in V, and d is the distance between the safety member and the first battery cell in mm; and/or the target voltage difference and the corresponding area between the safety member and the first battery cell satisfies the following relationship: $U/S \geq 0.00008$, where U is the voltage difference in V, and S is the corresponding area between the safety member and the first battery cell in $mm^2$.

In some possible implementations, the target voltage difference is within a range between 4 V and 1000 V.

In some possible implementations, the first battery cell and the safety member in the battery are insulated from each other; and when an abnormality of the first battery cell occurs, the insulation between the first battery cell and the safety member fails, and the target voltage difference between the first battery cell and the safety member causes the safety member to perform the safety regulation on the battery.

In some possible implementations, when an abnormality of the first battery cell occurs, a state of an insulating layer between the first battery cell and the safety member changes, such that the insulation between the first battery cell and the safety member fails.

In some possible implementations, the safety member is arranged corresponding to the first battery cell.

Fig. 18 shows a schematic flowchart of another safety regulation method 700 provided in an embodiment of the present application.

As shown in Fig. 18, in the embodiments of the present application, the safety regulation method 700 may include the following steps.

In S710, a characteristic signal of a battery is obtained, the characteristic signal of the battery being configured to indicate that an abnormality of the battery occurs.

In S720, a target voltage difference is established between a safety member and the battery according to the characteristic signal of the battery, the target voltage difference causing the safety member to perform a safety regulation on the battery when an abnormality of the battery occurs.

In some possible implementations, the safety regulation method 700 is applied to the variable voltage generation module 310 in the above apparatus embodiments. The variable voltage generation module 310 includes: a second control sub-module 314 and a variable voltage sub-module 315.

In this situation, step S710 described above may include: the second control sub-module 314 obtaining the characteristic signal of the battery; and step S720 described above may include: the second control sub-module 314 controlling, according to the characteristic signal of the battery, the variable voltage sub-module 315 to establish a target voltage difference between the safety member and the battery.

In some possible implementations, the variable voltage generation module 310 further includes: a monitoring sub-module 316. In this situation, the safety regulation method 700 may further include: the monitoring sub-module 316 monitoring the characteristic signal of the battery, and sending the characteristic signal of the battery to the second control sub-module 314.

In some possible implementations, the characteristic signal of the battery is configured to indicate that the battery is in a thermal runaway state and/or in a critical state within a preset time period before the thermal runaway state.

In some possible implementations, the characteristic signal of the battery comprises at least one of the following signals: an electrical parameter, a temperature, a pressure, a characteristic gas or a stress.

In some possible implementations, the characteristic signal of the battery includes: a characteristic signal of the first battery cell in the battery. In this situation, step S710 described above may include: obtaining the characteristic signal of the first battery cell; and step S720 described above may include: establishing a target voltage difference between the safety member and the first battery cell according to the characteristic signal of the first battery cell.

Fig. 19 shows a schematic structural block diagram of a battery system 101 provided in an embodiment of the present application.

As shown in Fig. 19, the battery system 101 may include a battery 10 and a safety regulation mechanism 300 in the above embodiments of the present application. The safety regulation mechanism 300 is configured to perform a safety regulation on the battery 10.

An embodiment of the present application further provides an electrical apparatus. The electrical apparatus may include the battery system 101 in the foregoing embodiments. The battery system 101 is configured to supply electric energy to the electrical apparatus.

In some embodiments, the electrical apparatus may be a vehicle 1, a ship or a spacecraft.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

**Claims**

1. A safety regulation mechanism, configured to perform a safety regulation on a battery, the safety regulation mechanism comprising: a variable voltage generation module and a safety member, wherein the variable voltage generation module is configured to establish a target voltage difference between the safety member and the battery, the target voltage difference causing the safety member to perform the safety regulation when an abnormality of the battery occurs.

2. The safety regulation mechanism according to claim 1, wherein the variable voltage generation module comprises: a voltage generator and a variable resistor, and the target voltage difference is related to an output voltage of the voltage generator.

**3.** The safety regulation mechanism according to claim 2, wherein the variable voltage generation module further comprises: a first control sub-module; and the variable voltage generation module being configured to establish a target voltage difference between the safety member and the battery comprises: the first control sub-module being configured to adjust a resistance value of the variable resistor to a target resistance value according to the output voltage of the voltage generator, such that the voltage generator establishes the target voltage difference between the safety member and the battery by means of the variable resistor.

**4.** The safety regulation mechanism according to claim 3, wherein the battery comprises: a first battery cell; and the first control sub-module is configured to adjust the resistance value of the variable resistor to the target resistance value according to a voltage difference between the voltage generator and the first battery cell, such that the voltage generator establishes the target voltage difference between the safety member and the first battery cell by means of the variable resistor.

**5.** The safety regulation mechanism according to claim 4, wherein the target voltage difference has a preset voltage difference value; and the first control sub-module is configured to determine the target resistance value of the variable resistor according to the preset voltage difference value, a value of the voltage difference between the first battery cell and the voltage generator, an equivalent resistance value between the first battery cell and the safety member, and an equivalent resistance value between the voltage generator and the safety member.

**6.** The safety regulation mechanism according to claim 4 or 5, wherein

the variable resistor is connected between the voltage generator and the safety member; or the variable resistor is connected between the first battery cell and the safety member; or the variable resistor is connected between the first battery cell and the voltage generator; or the variable resistor is integrated in the safety member.

**7.** The safety regulation mechanism according to any one of claims 4 to 6, wherein the voltage generator comprises: a second battery cell in the battery.

**8.** The safety regulation mechanism according to any one of claims 1 to 7, wherein the safety member contains a safety material; and

the target voltage difference causing the safety member to perform the safety regulation comprises: the target voltage difference being configured to form an electric arc between the safety member and the battery to break down the safety member, such that the safety member releases the safety material to perform the safety regulation.

**9.** The safety regulation mechanism according to claim 8, wherein the battery comprises a first battery cell; and the target voltage difference causing the safety member to perform the safety regulation when an abnormality of the battery occurs comprises: the target voltage difference causing the safety member to perform the safety regulation when an abnormality of the first battery cell occurs.

**10.** The safety regulation mechanism according to claim 9, wherein the variable voltage generation module being configured to establish a target voltage difference between the safety member and the battery comprises:

the variable voltage generation module being configured to establish the target voltage difference between the safety member and the first battery cell; and the target voltage difference being configured to form an electric arc between the safety member and the battery to break down the safety member such that the safety member releases the safety material to perform the safety regulation comprises: the target voltage difference being configured to form an electric arc between the safety member and the first battery cell to break down the safety member, such that the safety member releases the safety material to perform the safety regulation on a space where the first battery cell is located and/or a space near the first battery cell.

**11.** The safety regulation mechanism according to claim 10, wherein the target voltage difference being configured to form an electric arc between the safety member and the first battery cell to break down the safety member such that the safety member releases the safety material to perform the safety regulation on a space where the first battery cell is located comprises: the target voltage difference being configured to form the electric arc between the safety member and the first battery cell to break down the safety member and a case of the first battery cell, such that the safety member releases the safety material to perform the safety regulation on an internal space of the first battery cell.

**12.** The safety regulation mechanism according to claim 10 or 11, wherein the target voltage difference is related to at least one of the following parameters: a wall thickness of the safety member, a distance between the safety member and the first battery cell, and a corresponding area between the safety member and the first battery cell.

**13.** The safety regulation mechanism according to any one of claims 8 to 12, wherein the target voltage difference is within a range between 4 V and 1000 V.

**14.** The safety regulation mechanism according to any one of claims 9 to 13, wherein the first battery cell and the safety member are insulated from each other; and
when an abnormality of the first battery cell occurs, the insulation between the first battery cell and the safety member fails, and the target voltage difference between the first battery cell and the safety member causes the safety member to perform the safety regulation.

**15.** The safety regulation mechanism according to claim 14, wherein, when an abnormality of the first battery cell occurs, a state of an insulating layer between the first battery cell and the safety member changes, such that the insulation between the first battery cell and the safety member fails.

**16.** The safety regulation mechanism according to any one of claims 9 to 15, wherein the safety member is arranged corresponding to the first battery cell.

**17.** The safety regulation mechanism according to any one of claims 1 to 16, wherein the variable voltage generation module is configured to obtain a characteristic signal of the battery, the characteristic signal of the battery being configured to indicate that an abnormality of the battery occurs; and
the variable voltage generation module is configured to establish the target voltage difference between the safety member and the battery according to the characteristic signal of the battery.

**18.** The safety regulation mechanism according to claim 17, wherein the variable voltage generation module comprises: a second control sub-module and a variable voltage sub-module; and
the second control sub-module is configured to obtain the characteristic signal of the battery, and to control, according to the characteristic signal of the battery, the variable voltage sub-module to establish the target voltage difference between the safety member and the battery.

**19.** The safety regulation mechanism according to claim 18, wherein the variable voltage generation module further comprises: a monitoring sub-module; and
the monitoring sub-module is configured to monitor the characteristic signal of the battery and to send the characteristic signal of the battery to the second control sub-module.

**20.** The safety regulation mechanism according to any one of claims 17 to 19, wherein the characteristic signal of the battery is configured to indicate that the battery is in a thermal runaway state and/or in a critical state within a preset time period before the thermal runaway state.

**21.** The safety regulation mechanism according to any one of claims 17 to 20, wherein the characteristic signal of the battery comprises at least one of the following signals: an electrical parameter, a temperature, a pressure, a characteristic gas or a stress.

**22.** The safety regulation mechanism according to any one of claims 17 to 21, wherein the characteristic signal of the battery comprises: a characteristic signal of the first battery cell in the battery; and
the variable voltage generation module is configured to establish the target voltage difference between the safety member and the first battery cell according to the characteristic signal of the first battery cell.

**23.** A safety regulation method for performing a safety regulation on a battery, the safety regulation method comprising:
establishing a target voltage difference between a safety member and the battery, the target voltage difference causing the safety member to perform the safety regulation when an abnormality of the battery occurs.

**24.** The safety regulation method according to claim 23, wherein the safety regulation method is applied to a variable voltage generation module, the variable voltage generation module comprising: a voltage generator and a variable resistor, and the target voltage difference is related to an output voltage of the voltage generator.

**25.** The safety regulation method according to claim 24, wherein the variable voltage generation module further comprises: a first control sub-module; and
establishing a target voltage difference between a safety member and the battery comprises:
the first control sub-module adjusting a resistance value of the variable resistor to a target resistance value according to the output voltage of the voltage generator, such that the voltage generator establishes the target voltage difference between the safety member and the battery by means of the variable resistor.

**26.** The safety regulation method according to claim 25, wherein the battery comprises a first battery cell; and the first control sub-module adjusting a resistance value of the variable resistor to a target resistance value according to the output voltage of the voltage generator such that the voltage generator establishes the target voltage difference between the safety member and the battery by means of the variable resistor comprises:

the first control sub-module adjusting the resistance value of the variable resistor to the target resistance value according to a voltage difference between the voltage generator and the first battery cell, such that the voltage generator establishes the target voltage difference between the safety member and the first battery cell by means of the variable resistor.

**27.** The safety regulation method according to claim 26, wherein the target voltage difference has a preset voltage difference value; and

wherein, before the first control sub-module adjusting the resistance value of the variable resistor to the target resistance value according to a voltage difference between the voltage generator and the first battery cell, the safety regulation method further comprises:

the first control sub-module determining the target resistance value of the variable resistor according to the preset voltage difference value, a value of the voltage difference between the first battery cell and the voltage generator, an equivalent resistance value between the first battery cell and the safety member, and an equivalent resistance value between the voltage generator and the safety member.

**28.** The safety regulation method according to claim 26 or 27, wherein the variable resistor is connected between the voltage generator and the safety member; or

the variable resistor is connected between the first battery cell and the safety member; or
the variable resistor is connected between the first battery cell and the voltage generator; or
the variable resistor is integrated in the safety member.

**29.** The safety regulation method according to any one of claims 26 to 28, wherein the voltage generator comprises: a second battery cell in the battery.

**30.** The safety regulation method according to any one of claims 23 to 29, wherein the safety member contains a safety material; and

the target voltage difference causing the safety member to perform the safety regulation comprises:
the target voltage difference being configured to form an electric arc between the safety member and the battery to break down the safety member, such that the safety member releases the safety material to perform the safety regulation.

**31.** The safety regulation method according to claim 30, wherein the battery comprises a first battery cell; and the target voltage difference causing the safety member to perform the safety regulation when an abnormality of the battery occurs comprises:

the target voltage difference causing the safety member to perform the safety regulation when an abnormality of the first battery cell occurs.

**32.** The safety regulation method according to claim 31, wherein establishing a target voltage difference between the safety member and the battery comprises:

establishing the target voltage difference between the safety member and the first battery cell; and
the target voltage difference being configured to form an electric arc between the safety member and the battery to break down the safety member such that the safety member releases the safety material to perform the safety regulation comprises:
the target voltage difference being configured to form an electric arc between the safety member and the first battery cell to break down the safety member, such that the safety member releases the safety material to perform the safety regulation on a space where the first battery cell is located and/or a space near the first battery cell.

**33.** The safety regulation method according to claim 32, wherein the target voltage difference being configured to form an electric arc between the safety member and the first battery cell to break down the safety member such that the safety member releases the safety material to perform the safety regulation on a space where the first battery cell is located comprises:

the target voltage difference being configured to form the electric arc between the safety member and the first battery cell to break down the safety member and a case of the first battery cell, such that the safety member releases the safety material to perform the safety regulation on an internal space of the first battery cell.

**34.** The safety regulation method according to claim 32 or 33, wherein the target voltage difference is related to at least one of the following parameters:

a wall thickness of the safety member, a distance between the safety member and the first battery cell, and a corresponding area between the safety member and the first battery cell.

**35.** The safety regulation method according to any one of claims 30 to 34, wherein the target voltage difference is within a range between 4 V and 1000 V.

**36.** The safety regulation method according to any one of claims 31 to 35, wherein the first battery cell and the safety member are insulated from each other; and

the target voltage difference causing the safety member to perform the safety regulation when an abnormality of the first battery cell occurs comprises: when an abnormality of the first battery cell occurs, the insulation between the first battery cell and the safety member failing, and the target voltage difference between the first battery cell and the safety member causing the safety member to perform the safety regulation.

**37.** The safety regulation method according to claim 36, wherein, when an abnormality of the first battery cell occurs, a state of an insulating layer between the first battery cell and the safety member changes, such that the insulation between the first battery cell and the safety member fails.

**38.** The safety regulation method according to any one of claims 31 to 37, wherein the safety member is arranged corresponding to the first battery cell.

**39.** The safety regulation method according to any one of claims 23 to 38, wherein establishing a target voltage difference between the safety member and the battery comprises:

obtaining a characteristic signal of the battery, the characteristic signal of the battery being configured to indicate that an abnormality of the battery occurs; and
establishing the target voltage difference between the safety member and the battery according to the characteristic signal of the battery.

**40.** The safety regulation method according to claim 39, wherein the safety regulation method is applied to a variable voltage generation module, the variable voltage generation module comprising: a second control sub-module and a variable voltage sub-module;
wherein obtaining a characteristic signal of the battery comprises:

the second control sub-module obtaining the characteristic signal of the battery; and
establishing the target voltage difference between the safety member and the battery according to the characteristic signal of the battery comprises:
the second control sub-module controlling, according to the characteristic signal of the battery, the variable voltage sub-module to establish the target voltage difference between the safety member and the battery.

**41.** The safety regulation method according to claim 40, wherein the variable voltage generation module further comprises: a monitoring sub-module; and the safety regulation method further comprises:
the monitoring sub-module monitoring the characteristic signal of the battery and sending the characteristic signal of the battery to the second control sub-module.

**42.** The safety regulation method according to any one of claims 39 to 41, wherein the characteristic signal of the battery is configured to indicate that the battery is in a thermal runaway state and/or in a critical state within a preset time period before the thermal runaway state.

**43.** The safety regulation method according to any one of claims 39 to 42, wherein the characteristic signal of the battery comprises at least one of the following signals: an electrical parameter, a temperature, a pressure, a characteristic gas or a stress.

**44.** The safety regulation method according to any one of claims 39 to 43, wherein the characteristic signal of the battery comprises: a characteristic signal of the first battery cell in the battery; and
wherein obtaining a characteristic signal of the battery comprises:

obtaining the characteristic signal of the first battery cell; and
establishing the target voltage difference between the safety member and the battery according to the characteristic signal of the battery comprises:
establishing the target voltage difference between the safety member and the first battery cell according to the characteristic signal of the first battery cell.

**45.** A battery system, comprising:

a battery, and
a safety regulation mechanism of any one of claims 1 to 22, which is configured to perform a safety regulation on the battery.

**46.** An electrical apparatus, comprising:
a battery system of claim 45, which is configured to supply electric energy to the electrical apparatus.

1

**FIG. 1**

10

**FIG. 2**

Safety regulation mechanism 300

Safety member 320

Variable voltage generation module 310

**FIG. 3**

Battery 10

$\updownarrow$ U

Safety member 320

First control sub-module 311

Variable resistor 313

Voltage generator 312

Variable voltage generation module 310

Safety regulation mechanism 300

**FIG. 4**

Busbar 201

Battery cell 20

First battery cell 210

......

Battery cell 20

$\updownarrow$ $U_0$

Safety member 320

First control sub-module 311

Variable resistor 313

Voltage generator 312

Variable voltage generation module 310

Safety regulation mechanism 300

**FIG. 5**

Busbar201

| Battery cell 20 | First battery cell 210 | ...... | Second battery cell 220/Voltage generator 312 |

$U_0$   $R_{variable}$

Communication component 202

Safety member 320

First control sub-module 311

Safety regulation mechanism 300

**FIG. 6**

Busbar 201

| Battery cell 20 | First battery cell 210 | ...... | Second battery cell 220/Voltage generator 312 |

$R_1$   $U_0$   $R_2$   Safety member 320

$R_{variable}$

First control sub-module 311

Safety regulation mechanism 300

**FIG. 7**

Battery 10

Safety member 320 ⎫
Variable voltage generation module 310 ⎬ Safety regulation mechanism 300

**FIG. 8**

Busbar 201

| Battery cell 20 | First battery cell 210 | ...... | Battery cell 20 |

$U$

Safety member 320 ⎫
Variable voltage generation module 310 ⎬ Safety regulation mechanism 300

**FIG. 9**

Busbar 201

| Battery cell 20 | First battery cell 210 | ...... | Second battery cell 220/Voltage generator 312 |

$R_0$  $R_1$  $U_0$  $R_2$

Safety member 320

$R_{variable}$

First control sub-module 311

Safety regulation mechanism 300

**FIG. 10**

**FIG. 11**

Communication component 202

Busbar 201

| Battery cell 20 | First battery cell 210 | ...... | Battery cell 20 |

$U_0$

Safety member 320

Variable voltage generation module 310

Safety regulation mechanism 300

**FIG. 11**

**FIG. 12**

Communication component 202

Busbar 201

| Battery cell 20 | First battery cell 210 | ...... | Battery cell 20 |

$U_0$

Safety member 320

Variable voltage sub-module 315

Second control sub-module 314

Variable voltage generation module 310

Safety regulation mechanism 300

**FIG. 12**

Communication component 202

Busbar 201

| Battery cell 20 | First battery cell 210 | ...... | Battery cell 20 |

$\updownarrow U_0$

Safety member 320

Variable voltage sub-module 315

Second control sub-module 314

Motoring sub-module 316

Variable voltage generation module 310

Safety regulation mechanism 300

**FIG. 13**

Communication component 202

Busbar 201

| Battery cell 20 | First battery cell 210 | ...... | Second battery cell 220/Voltage generator 312 |

$R_0$  $R_1$  $U_0$  $R_2$

$R_{variable}$

Safety member 320

Control sub-module

Safety regulation mechanism 300

**FIG. 14**

400

Establish a target voltage difference between a safety member and a battery, the target voltage difference causing the safety member to perform a safety regulation on the battery when an abnormality of the battery occurs  ⟿ S410

**FIG. 15**

<u>500</u>

A first control sub-module adjusts a resistance value of a variable resistor to a target resistance value according to an output voltage of a voltage generator, such that the voltage generator establishes a target voltage difference between a safety member and a battery by means of the variable resistor ⌒ S510

**FIG. 16**

<u>600</u>

Establish a target voltage difference between a safety member and a first battery cell, the target voltage difference being configured to form an electric arc between the safety member and the first battery cell to break down the safety member when an abnormality of the first battery cell occurs, such that the safety member releases a safety material to perform a safety regulation on a space where the first battery cell is located and/or a space near the first battery cell ⌒ S610

**FIG. 17**

<u>700</u>

Obtain a characteristic signal of a battery, the characteristic signal of the battery being configured to indicate that an abnormality of the battery occurs ⌒ S710

Establish a target voltage difference between a safety member and the battery according to the characteristic signal of the battery, the target voltage difference causing the safety member to perform a safety regulation on the battery when an abnormality of the battery occurs ⌒ S720

**FIG. 18**

Battery system 101

Battery 10

Safety regulation mechanism 300

**FIG. 19**

**INTERNATIONAL SEARCH REPORT**

| International application No. |
|---|
| **PCT/CN2022/099490** |

| A. | CLASSIFICATION OF SUBJECT MATTER |
|---|---|
| | H01M10/42(2006.01)i;H02J7/00(2006.01)i |

According to International Patent Classification (IPC) or to both national classification and IPC

| B. | FIELDS SEARCHED |
|---|---|

Minimum documentation searched (classification system followed by classification symbols)

H01M,H02J

Documentation searched other than minimum documentation to the extent that such documents are included in the fields searched

Electronic data base consulted during the international search (name of data base and, where practicable, search terms used)

CNTXT, CNABS, ENTXT, ENTXTC, CNKI, VEN: 安全阀, 变电阻, 变值电阻, 可变电阻, 变阻, 电池, 电势差, 电压, 电压差, 电阻, 短路, 反转片, 防爆, 分压电阻, 高温, 过电流, 过热, 灭火, 热失控, 消防, 异常, 阻燃剂, NTC, Safety Valve, Variable Resistance, Variable Value Resistance, Battery, Potential Difference, Voltage, Voltage Difference, Resistance, Short Circuit, Return Sheet, Explosion Resistance, Division Voltage Resistance, High Temperature, Overcurrent, Overheat, Fire Extinguishing, Thermal Runaway, Fire Protection, Abnormal, Flame Retardant, NTC

| C. | DOCUMENTS CONSIDERED TO BE RELEVANT |
|---|---|

| Category* | Citation of document, with indication, where appropriate, of the relevant passages | Relevant to claim No. |
|---|---|---|
| X | DE 102014012067 A1 (DAIMLER AG.) 18 February 2016 (2016-02-18) <br> description, paragraphs 5-32, and figures 1-2 | 1-2, 17, 20-21, 23-24, 39, 42-43 |
| X | CN 206584999 U (SHENZHEN TECHOSS POWER TECHNOLOGY CO., LTD.) 24 October 2017 (2017-10-24) <br> description, paragraphs 4-28, and figures 1-3 | 1-2, 23-24 |
| A | CN 109830764 A (DELTA ELECTRONICS INC.) 31 May 2019 (2019-05-31) <br> entire document | 1-46 |
| A | CN 113511104 A (NINGDE CONTEMPORARY AMPEREX TECHNOLOGY CO., LTD.) 19 October 2021 (2021-10-19) <br> entire document | 1-46 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 February 2023** | **20 February 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/099490**

| Patent document cited in search report | | | Publication date (day/month/year) | Patent family member(s) | | | Publication date (day/month/year) |
|---|---|---|---|---|---|---|---|
| DE | 102014012067 | A1 | 18 February 2016 | None | | | |
| CN | 206584999 | U | 24 October 2017 | None | | | |
| CN | 109830764 | A | 31 May 2019 | US | 2019157880 | A1 | 23 May 2019 |
| | | | | US | 10862319 | B2 | 08 December 2020 |
| | | | | CN | 109830764 | B | 06 August 2021 |
| CN | 113511104 | A | 19 October 2021 | None | | | |

Form PCT/ISA/210 (patent family annex) (July 2022)